# EUROPÄISCHE PATENTANMELDUNG

(11) **EP 3 708 321 A1**
(43) Veröffentlichungstag der Anmeldung: **16.09.2020**
(21) Anmeldenummer: 19163219.9
(22) Anmeldetag: 15.03.2019
(51) Int. Cl.: B28B 1/00, B01F 7/00, B28C 5/12, B28C 7/02, B33Y 30/00, E04G 21/04

(54) **VERFAHREN ZUM APPLIZIEREN EINES BAUSTOFFES**

(71) Anmelder: SIKA TECHNOLOGY AG, 6340 Baar (CH)
(72) Erfinder: LOOTENS, Didier, 8700 Küssnacht (CH); LIARD, Maxime, 8050 Zürich (CH); BOON, Gary, Dubai (AE); HAUGUEL, Lolita, 8051 Zürich (CH)
(74) Vertreter: Sika Patent Attorneys

(57) **Zusammenfassung**

Ein Verfahren zum Applizieren eines aushärtbaren Baustoffs, insbesondere in einem generativen Verfahren, umfasst die Schritte:
- Bereitstellen von wenigstens zwei separaten Komponenten des Baustoffs;
- Zugabe der wenigstens zwei separaten Komponenten in eine Mischvorrichtung (10), insbesondere in eine Mischkammer der Mischvorrichtung (10), mit einer Zuführvorrichtung (9);
- Vermischen der wenigstens zwei separaten Komponenten in der Mischvorrichtung (10) unter Erhalt des aushärtbaren Baustoffs in abbindendem aushärtendem Zustand;
- Zuführen des abbindenden Baustoffs durch eine Förderleitung (12) zu einem in wenigstens einer Raumrichtung bewegbaren Druckkopf (3) unter Verwendung einer Fördervorrichtung (30);
- Applizieren des abbindenden Baustoffs mit dem bewegbaren Druckkopf (3).

## Beschreibung

### Technisches Gebiet

Die Erfindung betrifft ein Verfahren zum Applizieren eines aushärtbaren Baustoffs, insbesondere eines mineralischen Bindemittels oder einer mineralischen Bindemittelzusammensetzung. Weiter betrifft die Erfindung einen Formkörper, welche durch das Verfahren zum Applizieren eines aushärtbaren Baustoffs erhältlich ist oder erhalten wird.

### Stand der Technik

Die Herstellung von Formkörpern durch generative Fertigungsverfahren gewinnt in sämtlichen Technologiebereichen zunehmend an Bedeutung. Der Begriff "generatives Fertigungsverfahren" bzw. "generative Fertigung" bezeichnet dabei Verfahren, bei welchen durch gezielte räumliche Ablagerung, Aufbringung und/oder Verfestigung von Material ein räumliches Objekt bzw. ein Formkörper erzeugt wird.

Die Ablagerung, Aufbringung und/oder Verfestigung des Materials erfolgt dabei insbesondere anhand eines Datenmodells des zu erzeugenden Objekts und insbesondere lage- oder schichtweise. Jedes Objekt wird im generativen Fertigungsverfahren typischerweise aus einer oder mehreren Lagen hergestellt. Üblicherweise wird zur Fertigung eines Objekts ein formloses Material (z.B. Flüssigkeiten, Pulver, Granulate, etc.) und/oder ein formneutrales Material (z.B. Bänder, Drähte) verwendet, welches insbesondere chemischen und/oder physikalischen Prozessen (z.B. Schmelzen, Polymerisieren, Sintern, Aushärten) unterzogen wird. Generative Fertigungsverfahren werden unter anderem auch als "Additive Fertigungsverfahren", "Additive Manufacturing" oder "3D-Druck" bezeichnet.

Im Baubereich wird seit einiger Zeit ebenfalls versucht, geometrisch anspruchsvolle Bauelemente wie beispielsweise Betonelemente mit generativen Verfahren herzustellen.

Dies ist mit entsprechenden Apparaturen zwar bis zu einem gewissen Grad möglich. So offenbart beispielsweise die WO 2013/064826 A1 ein Verfahren sowie eine Vorrichtung zum Applizieren von zementösen Materialien. Dabei wird flüssiges zementöses Material über einen beweglichen Roboterarm an einem Bestimmungsort appliziert. Nachteilig an solchen Systemen ist es, dass der Baustoff dabei oftmals nicht genügend konstant ist bezüglich verschiedener Eigenschaften, insbesondere bezüglich einer Durchmischung von Komponenten. Dadurch kann es an einer mit dem Baustoff hergestellten Struktur zu Unregelmässigkeiten kommen.

Allgemein erschweren die physikalischen und chemischen Eigenschaften von mineralischen Bindemittelzusammensetzungen die generative Herstellung von Objekten bzw. Formkörpern aus solchen Bindemittelzusammensetzungen stark. Wie sich herausgestellt hat, ist dies insbesondere darauf zurückzuführen, dass die Eigenschaften von mineralischen Bindemittelzusammensetzungen im verarbeitbaren Zustand, während dem Aushärtevorgang als auch im ausgehärteten Zustand stark von den Umgebungsbedingungen und den apparativen Gegebenheiten bei der Herstellung und Applikation mitbeeinflusst werden.

Zudem werden je nach herzustellenden Objekten andere Anforderungen an die ausgehärtete Baustoffzusammensetzung gestellt. Beispielsweise kann es erforderlich sein, die Fliesseigenschaften, die Kinetik und das Schrumpfverhalten während dem Erstarrungs- und Aushärtevorgang oder die Festigkeit und die Oberflächenbeschaffenheit nach dem Aushärten zu kontrollieren, um ein Objekt mit den gewünschten Eigenschaften herzustellen.

Bislang bekannte Verfahren zur generativen Herstellung von Objekten aus aushärtbaren Baustoffen vermögen nicht vollständig zu überzeugen oder sie bedingen komplexe und aufwändige Apparaturen.

Es besteht deshalb weiterhin das Bedürfnis nach neuen und verbesserten Lösungen, welche die vorstehend genannten Nachteile möglichst überwinden.

### Darstellung der Erfindung

Aufgabe der vorliegenden Erfindung ist es daher, verbesserte Verfahren zur generativen Herstellung von Formkörpern zu schaffen. Die Verfahren sollen insbesondere eine effiziente, zuverlässige und möglichst flexible Herstellung von Formkörpern aus aushärtbaren Baustoffen, insbesondere aus mineralischen Bindemittelzusammensetzungen, ermöglichen. Dies nach Möglichkeit mit einem möglichst geringen apparativen Aufwand und möglichst kostengünstig.

Überraschenderweise wurde gefunden, dass die erfindungsgemässe Aufgabe durch ein Verfahren zum Applizieren eines aushärtbaren Baustoffs gemäss Anspruch 1 gelöst werden kann.

Wie sich gezeigt hat, können mit einem solchen Verfahren mit einem relativ geringen apparativer Aufwand in effizienter, zuverlässiger und flexibler Art und Weise Objekte aus aushärtbaren Baustoffen, wie beispielsweise aus mineralischen Bindemittelzusammensetzungen, hergestellt werden. Aufgrund des beschränkten apparativen Aufwands, können die Kosten für die erfindungsgemässen Systeme relativ tief gehalten werden.

Überraschenderweise hat sich zudem gezeigt, dass mit dem erfindungsgemässen Verfahren Objekte herstellbar sind, welche hinsichtlich Festigkeit und Oberflächenbeschaffenheit eine gute Qualität aufweisen. Die Verfahren sind darüber hinaus universell einsetzbar, ergeben gut reproduzierbare Ergebnisse und können bei Bedarf für die Applikation von unterschiedlichsten aushärtbaren Baustoffen, z.B. Mörtel- oder Betonzusammensetzungen, verwendet werden.

Dies dürfte darauf zurückzuführen sein, dass zwei separate Komponenten des Baustoffs mit einer Zuführvorrichtung in eine Mischvorrichtung zugegeben werden können. Damit kann die Zusammensetzung des aushärtbaren Baustoffs vor und/oder während der Applikation jederzeit und in flexibler Art und Weise angepasst werden.

Unter Verwendung von entsprechend ausgestalteten Steuereinheiten und/oder optionalen Messeinheiten kann das erfindungsgemässe Verfahren zudem für verschiedenen Anwendungen in relativ einfacher Art und Weise erweitert werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die Erfindung ein Verfahren zum Applizieren eines aushärtbaren Baustoffs, insbesondere in einem generativen Verfahren, umfassend die Schritte:
- Bereitstellen von wenigstens zwei separaten Komponenten des Baustoffs;
- Zugabe der wenigstens zwei separaten Komponenten in eine Mischvorrichtung, insbesondere in eine Mischkammer der Mischvorrichtung, mit einer Zuführvorrichtung;
- Vermischen der wenigstens zwei separaten Komponenten in der Mischvorrichtung unter Erhalt des aushärtbaren Baustoffs in abbindendem Zustand;
- Zuführen des abbindendem Baustoffs durch eine Förderleitung zu einem in wenigstens einer Raumrichtung bewegbaren Druckkopf unter Verwendung einer Fördervorrichtung;
- Applizieren des abbindenden Baustoffs mit dem bewegbaren Druckkopf.

Unter dem Begriff "Baustoff" wird vorliegend ein Material verstanden, welches mindestens aus mindestens zwei separaten Komponenten gebildet wird oder daraus besteht. Der Baustoff dient insbesondere zum Errichten von dreidimensionalen Objekten, welche z.B. Bestandteile von Bauwerken und/oder Gebäuden sein können.

Ein "aushärtbarer Baustoff" steht für einen Baustoff, welcher typischerweise fliessfähig oder verflüssigbar ist und nach dem Anmachen, beispielsweise durch die Zugabe von Anmachwasser und/oder durch das Vermischen von Komponenten, als Feststoff aushärten kann.

Ein "abbindender Baustoff" ist entsprechend ein aushärtbarer Baustoff in abbindendem oder aushärtendem Zustand, bei welchem der Abbindungsprozess in Gang gesetzt wurde, beispielsweise durch Zugabe von Anmachwasser und/oder einem Härter.

Beim aushärtbaren Baustoff handelt es sich beispielsweise um Reaktionsharze, ein mineralisches Bindemittel, mineralische Bindemittelzusammensetzungen oder Mischungen davon.

Reaktionsharze sind insbesondere flüssige oder verflüssigbare Kunstharze, welche durch Polymerisation oder Polyaddition zu Duromeren aushärten. Beispielsweise können ungesättigte Polyesterharze, Vinylesterharze, Acrylharze, Epoxidharze, Polyurethanharze und/oder Siliconharze eingesetzt werden.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (z.B. Gips oder Weisskalk) sein.

Eine "mineralische Bindemittelzusammensetzung" ist entsprechend eine Zusammensetzung enthaltend mindestens ein mineralisches Bindemittel. Diese enthält vorliegend insbesondere das Bindemittel, Aggregate und optional eines oder mehrere Zusatzmittel oder Additive. Als Aggregate können z.B. Gesteinskörnungen, Kies, Sand (in natürlicher und/oder bearbeiteter (z.B. gebrochener) Form) und/oder Füller vorliegen.

Bevorzugt erfolgt die Vermischung der wenigstens zwei separaten Komponenten in einem kontinuierlichen Prozess, im Besonderen während dem Applizieren des Baustoffs.

Im Speziellen wird aus den mindestens zwei separaten Komponenten kontinuierlich aushärtbarer Baustoff in abbindendem Zustand bereitgestellt, welcher über die Förderleitung zum Druckkopf gefördert und mit diesem appliziert wird.

Bei der Applikation werden bevorzugt mehrere übereinanderliegende Schichten des Baustoffs übereinanderliegend aufgebracht, so dass das zu erzeugende Objekt gebildet wird.

Bevorzugt beträgt eine mittlere Verweildauer der Komponenten des aushärtbaren Baustoffs beim Vermischen in der Mischvorrichtung, insbesondere in einem dynamischen Mischer, weniger als 10 s, mehr bevorzugt weniger als 7 s, besonders bevorzugt weniger als 4 s. Die mittlere Verweildauer der Komponenten des aushärtbaren Baustoffs in der Mischeinrichtung ist dabei die Zeitdauer, welche ein Partikel des aushärtbaren Baustoffs in der Mischeinrichtung, vom Einlass bis zum Auslass, durchschnittlich verweilt.

Das Vermischen der wenigstens zwei separaten Komponenten zum aushärtbaren Baustoff in abbindendem Zustand erfolgt bevorzugt in einem dynamischen Mischer. Entsprechend umfasst die Mischvorrichtung vorzugsweise einen dynamischen Mischer oder die Mischvorrichtung besteht aus einem dynamischen Mischer.

Unter einem "dynamischen Mischer" wird im vorliegenden Dokument eine Mischvorrichtung verstanden, welche bewegbare Elemente umfasst und geeignet ist, durch eine Bewegung der bewegbaren Elemente feste und/oder flüssige Bestandteile zu vermischen. Durch einen dynamischen Mischer lässt sich eine besonders effektive Vermischung der Komponenten erreichen und es kann während dem Mischvorgang Energie in den aushärtbaren Baustoff eingetragen werden. Dies ist insbesondere von Vorteil, wenn der aushärtbare Baustoff eine mineralische Bindemittelzusammensetzung umfasst.

Prinzipiell kann aber auch ein statischer Mischer verwendet werden. Ein statischer Mischer ist ein Mischer in welchen die Vermischung allein durch die Strömungsbewegung der durch den Mischer bewegten Fluide bewirkt wird, ohne dass bewegte Elemente vorliegen. Typischerweise verfügt ein statischer Mischer über strömungsbeeinflussende Elemente in einer rohrförmigen Mischkammer. Die strömungsbeeinflussenden Elemente können den Stoffstrom ablenken, aufteilen, und/oder zusammenführen, wodurch die Vermischung erreicht wird.

Mit Vorteil ist der Druckkopf räumlich von der Mischvorrichtung, insbesondere einem dynamischen Mischer, getrennt und/oder beabstandet angeordnet. Dies gilt im Besonderen für alle dynamischen Mischer des Systems.

Bevorzugt ist die Mischvorrichtung, insbesondere ein dynamischer Mischer, so angeordnet, dass bei einer Bewegung des Druckkopfs im Betrieb eine Position des Druckkopfs relativ zur Mischvorrichtung, insbesondere einem dynamischen Mischer, verändert wird. Dies gilt im Besonderen für alle dynamischen Mischer.

Die Mischvorrichtung, insbesondere ein dynamischer Mischer der Mischvorrichtung, ist bevorzugt stationär angeordnet. Damit muss dieser im Betrieb nicht mit dem sich bewegendem Druckkopf mitbewegt werden. Bevorzugt sind alle dynamischen Mischer stationär angeordnet.

Bevorzugt umfasst die Mischvorrichtung, in welcher der aushärtende Baustoff erzeugt wird, einen dynamischen Mischer, welcher in Stromrichtung vor dem Druckkopf angeordnet ist, wobei bevorzugt am bewegbaren Druckkopf kein dynamischer Mischer angeordnet ist.

Damit wird erreicht, dass bei einer Bewegung des Druckkopfs die Mischvorrichtung, insbesondere ein dynamischer Mischer, nicht mitbewegt wird. Dies hat wiederum den Vorteil, dass die Mechanik zur Bewegung des Druckkopfs einfacher ausgestaltet sein kann, was sowohl den apparativen Aufwand als auch die Kosten reduziert.

Grundsätzlich ist es aber auch möglich, die Mischvorrichtung zumindest teilweise im Bereich des sich bewegenden Druckkopfs anzubringen.

Bevorzugt ist ein Verfahren, bei welchem der aushärtbare Baustoff in abbindendem Zustand nach erfolgter Vermischung der wenigstens zwei separaten Komponenten, insbesondere in einem dynamischen Mischer, keinen weiteren Mischer, im Besonderen keinen weiteren dynamischen Mischer, mehr durchläuft.

In einer weiteren beispielhaften Ausführungsform wird der aushärtbare Baustoff in abbindendem Zustand vor dem Austritt aus dem Druckkopf durch einen statischen Mischer geleitet.

Gemäss einer besonderen Ausführungsform beinhaltet die Mischvorrichtung einen dynamischen Mischer und einen statischen Mischer, wobei bevorzugt der statische Mischer in der Förderleitung und/oder im Druckkopf vorliegt. Der dynamische Mischer ist bevorzugt in Strömungsrichtung vom statischen Mischer beabstandet angeordnet. Im Besonderen ist der dynamische Mischer in Strömungsrichtung vor dem statischen Mischer angeordnet.

Dadurch lässt sich der aushärtbare Baustoff nach einer ersten Vermischung im dynamischen Mischer im statischen Mischer nochmals aufmischen. Wird der statische Mischer direkt vor dem Druckkopf oder im Druckkopf selbst angeordnet, kann dies unmittelbar vor dem Austritt des abbindenden Baustoffs aus dem Druckkopf erfolgen, was die Homogenität des aus dem Druckkopf austretenden Baustoffs verbessern kann.

Ein statischer Mischer im Bereich des Druckkopfs hat zudem den Vorteil, dass dieser in die Förderleitung und/oder den Druckkopf integriert vorliegen kann, wodurch der Bereich des Druckkopfs kompakt gehalten werden kann. Zudem sind statische Mischer im Vergleich mit dynamischen Mischern typischerweise relativ leicht, womit die Mechanik zur Bewegung des Druckkopfs weniger robust sein muss, was sowohl den apparativen Aufwand als auch die Kosten reduziert.

In einer besonderen Ausführungsform des Verfahrens wird der abbindende Baustoff hinsichtlich seiner chemischen und/oder physikalischen Eigenschaften beeinflusst und/oder verändert. Dies insbesondere in der Förderleitung und/oder im Druckkopf, im Besonderen im Druckkopf.

Bevorzugt werden die Fliesseigenschaften und/oder das Erstarrungsverhalten des aushärtenden Baustoffs kontrolliert und/oder verändert.

Beispielsweise wird dem abbindenden Baustoff ein Zusatzmittel zur Beeinflussung der chemischen und/oder physikalischen Eigenschaften des aushärtbaren Baustoffs beigegeben. Bevorzugt ist das Zusatzmittel ausgewählt aus einem Verzögerer, einem Rheologiehilfsmittel und/oder einem Fliessmittel. Dabei handelt es sich bevorzugt um einen Verzögerer, ein Rheologiehilfsmittel oder ein Fliessmittel für mineralische Bindemittelzusammensetzungen.

Verzögerer sind beispielsweise ausgewählt aus der Liste umfassend Hydroxycarbonsäuren, Saccharose und/oder Phosphate. Dies im Besonderen falls es sich beim aushärtbaren Baustoff um ein mineralisches Bindemittel oder eine mineralische Bindemittelzusammensetzung handelt.

Als Fliessmittel kommen beispielsweise Lignosulfonate, sulfonierte Naphthalin-Formaldehyd-Kondensate, sulfonierte Melamin-Formaldehyd-Kondensate, sulfonierte Vinylcopolymere, Polyalkylenglykole mit Phosphonatgruppen, Polyalkylenglykole mit Phosphatgruppen, Polycarboxylate, Polycarboxylathether, Kammpolymere mit Polyalkylenoxid-Seitenketten und anionischen Gruppen im Polymer-Rückgrat, wobei die anionischen Gruppen im Besonderen ausgewählt sind aus Carboxylatgruppen, Sulfonatgruppen, Phosphonatgruppen oder Phosphatgruppen, oder Mischungen der genannten Fliessmittel, in Frage.

Bevorzugt ist das Fliessmittel mit einem Anteil von 0.05 bis 5 Gewichts-%, bevorzugt in 0.08 bis 4 Gewichts-%, insbesondere in 0.1 bis 3 Gewichts-%, gerechnet als trockene Substanz, bezogen auf das Gesamtgewicht der trockenen Bindemittelzusammensetzung, vorhanden.

Unter "Rheologiehilfsmittel" versteht man im vorliegenden Dokument eine Substanz, die die rheologischen Eigenschaften des abbindenden Baustoffs, insbesondere einer wasserhaltigen mineralischen Bindemittelzusammensetzung, verändern kann, insbesondere erhöht sie die Viskosität, die Fliessgrenze und/oder die Thixotropie.

Beispielsweise ist das Rheologiehilfsmittel ausgewählt aus der Gruppe bestehend aus modifizierten Stärken, modifizierten Cellulosen, mikrobiellen Polysacchariden und mineralischen Verdickungsmitteln. Die modifizierte Stärke ist bevorzugt ein Stärkeether, insbesondere Hydroxypropylstärke, Carboxymethylstärke oder Carboxymethylhydroxypropylstärke. Die modifizierte Cellulose ist bevorzugt Methylcellulose, Ethylcellulose, Hydroxymethylcellulose, Hydroxyethylcellulose oder Methylhydroxyethylcellulose.

Bevorzugt wird das Rheologiehilfsmittel mit einem Anteil in 0.01 bis 2 Gewichts-%, bezogen auf das Gesamtgewicht der trockenen mineralischen Bindemittelzusammensetzung, zugegeben.

Durch die genannten Vertreter von Zusatzmitteln kann das Fliess-, Abbinde- oder Aushärteverhalten von aushärtbaren Baustoffen in Form von mineralischen Bindemittelzusammensetzungen besonders gut eingestellt werden. Das Rheologiehilfsmittel ist besonders geeignet, die Formstabilität der wasserhaltigen Bindemittelzusammensetzung zu gewährleisten und einer aufgebrachten Schicht genügend Standfestigkeit zu verleihen, um eine oder mehrere weitere Schichten zu tragen, ohne die Form wesentlich zu ändern. Der Einsatz von Verzögerern kann vorteilhaft sein, da dadurch die Verarbeitungsdauer der wasserhaltigen Bindemittelzusammensetzung verlängert wird.

Insbesondere wird das Zusatzmittel dem aushärtbaren Baustoff in aushärtendem Zustand beigegeben, beispielsweise über eine in der Förderleitung und/oder im Bereich des Druckkopfs vorliegende Einlassdüse. Bevorzugt erfolgt die Beigabe des Zusatzmittels somit nach dem Vermischen der wenigstens zwei Komponenten und nachdem dem Erhalt des aushärtbaren Baustoff in abbindendem Zustand.

Die Einlassdüse liegt in einer vorteilhaften Ausführungsform in Strömungsrichtung vor einem allenfalls vorliegenden statischen Mischer und/oder im Bereich einer Auslassöffnung des Druckkopfs. Damit kann das Zusatzmittel auf effektive Art und Weise in den abbindenden Baustoff beigegeben und mit diesem vermischt werden.

Ein Zusatzmittel kann aber auch als Bestandteil einer Komponente und/oder als separate Komponenten beim Vermischen der wenigstens zwei Komponenten beigegeben werden.

Weiter kann es vorteilhaft sein, wenn der erhaltene aushärtende Baustoff vor dem Austritt aus dem Druckkopf in der Förderleitung und/oder im Druckkopf be- und/oder entlüftet wird, insbesondere durch Luftzufuhr, durch eine Vakuumbehandlung und/oder durch Vibration.

Dadurch können die Fliesseigenschaften des abbindenden Baustoffs beim Applizieren kontrolliert und/oder verändert werden. Dies kann z.B. nützlich sein, um die Fliesseigenschaften bei sich verändernden Umgebungsbedingungen konstant zu halten und/oder die Fliesseigenschaften an den jeweils zu erzeugenden Abschnitt des Objekts anzupassen.

Gemäss einer bevorzugten Ausführungsform wird eine Temperatur des abbindenden Baustoffs vor dem Austritt aus dem Druckkopf verändert, insbesondere durch ein Heizelement und/oder ein Kühlelement.

Mit solchen Massnahmen kann die Temperatur des abbindenden Baustoffs beim Applizieren kontrolliert und/oder verändert werden. Dies kann z.B. nützlich sein, um die Erstarrungs- und/oder Härtungsprozesse zu kontrollieren und/oder steuern. Z.B. kann bei sich verändernden Umgebungsbedingungen die Temperatur des aushärtenden Baustoffs angepasst werden. Ebenso können die Abbinde- oder Härtungsprozesse für verschiedene zu erzeugende Abschnitt des Objekts durch eine Temperaturanpassung verändert werden.

Gemäss einer besonders bevorzugten Ausführungsform wird eine chemische und/oder physikalische Eigenschaft des abbindenden Baustoffs in der Mischvorrichtung, in der Förderleitung, im Druckkopf und/oder nach der Abgabe aus dem Druckkopf gemessen. Bevorzugt wird eine Temperatur, ein Druck, eine Feuchtigkeit, eine elektrische Leitfähigkeit, eine Geschwindigkeitsverteilung und/oder eine Viskosität des aushärtenden Baustoffs gemessen.

Durch die Bestimmung einer chemischen und/oder physikalischen Eigenschaft des abbindenden Baustoffs kann dieser hinsichtlich seines konkreten Zustands beurteilt werden. Dies ermöglicht es, bei Bedarf beispielsweise das Verhältnis der Komponenten, die Fördergeschwindigkeit des abbindenden Baustoffs und/oder die Zugaberate eines Zusatzmittels in Abhängigkeit der chemischen und/oder physikalischen Eigenschaft anzupassen. Insgesamt kann dadurch eine konstantere Qualität des aushärtenden Baustoffs erreicht werden und/oder der abbindende Baustoff kann für spezifische Abschnitte des zu erzeugenden Objekts gezielt angepasst oder verändert werden.

Das Verfahren wird mit Vorteil so durchgeführt, dass eine gemessene chemische und/oder physikalische Eigenschaft des abbindenden Baustoffs einen definierten Sollwert aufweist, wobei im Besonderen für verschiedene Abschnitte des zu erzeugenden Objekts unterschiedliche Sollwerte definiert sein können oder sind.

Besonders bevorzugt erfolgt die Bestimmung der chemischen und/oder physikalischen Eigenschaft während dem Applizieren des Baustoffs, insbesondere in Echtzeit.

Eine Messfrequenz zur Bestimmung der chemischen und/oder physikalischen Eigenschaft ist bevorzugt > 0.01 Hz, bevorzugt, > 0.1 Hz, besonders bevorzugt > 1 Hz, ganz besonders bevorzugt > 10 Hz ist. Damit lassen sich die chemischen und/oder physikalischen Eigenschaften des abbindenden Baustoffs in regelmässigen Abständen oder kontinuierlich bestimmen.

Zur Bestimmung der chemischen und/oder physikalischen Eigenschaften kann eine Messeinheit verwendet werden, welche bevorzugt in der Mischvorrichtung, in der Förderleitung im Druckkopf und/oder in einem externen Bereich angeordnet ist.

Besonders bevorzugt umfasst die Messvorrichtung eine Temperaturmessvorrichtung, eine Druckmessvorrichtung, ein Feuchtigkeitsmessvorrichtung, eine Messvorrichtung zur Bestimmung der elektrischen Leitfähigkeit, einen Penetrometer, einen Ultraschalltransducer und/oder ein Rheometer. Entsprechende Messvorrichtungen sind dem Fachmann an sich bekannt.

Damit lassen sich im Wesentlichen alle relevanten Eigenschaften des abbindenden Baustoffs bestimmen.

Weiter kann es vorteilhaft sein, wenn eine Durchlassöffnung am Auslass des Druckkopfs während dem Applizieren verändert wird. Dies beispielsweise in Abhängigkeit der Struktur des zu erzeugenden Objekts. Dadurch lässt sich die Förderrate beim Applizieren des abbindenden Baustoffs gezielt anpassen.

Im Besonderen erfolgt die Veränderung der Durchlassöffnung am Auslass des Druckkopfs durch öffnen und/oder schliessen eines Ventils, insbesondere eines pneumatisch und/oder elektromechanisch öffen- und schliessbaren Ventils.

Insbesondere wird das Verfahren unter Verwendung einer Steuereinheit durchgeführt. Die Steuereinheit ist insbesondere derart ausgelegt, dass die vorstehend beschriebenen Verfahrensschritte gesteuert und/oder geregelt werden können. Hierfür kann die Steuereinheit derart ausgelegt sein, dass wenigstens ein Teil der im System vorhandenen Vorrichtungen und Einheiten gesteuert und/oder geregelt werden können.

Unter dem Begriff "regeln" bzw. "geregelt" wird insbesondere die Einstellung eines vorgegebenen Sollwerts sowie dessen Aufrechterhaltung für einen definierten Zeitraum verstanden.

Die Steuereinheit verfügt insbesondere über einen Prozessor, einen Datenspeicher, eine Schnittstelle zum Empfang von Daten von allenfalls vorhandenen Messvorrichtungen und/oder eine Schnittstelle zur Ansteuerung von Vorrichtungen des Systems. Die im System vorhandenen Vorrichtungen und Einheiten sind bevorzugt über Datenleitungen, Steuerleitungen und/oder drahtlose Kommunikationssysteme mit der Steuereinheit verbunden.

Bei den ansteuerbaren Vorrichtungen handelt es sich, soweit vorhanden, insbesondere um den bewegbaren Druckkopf, die steuerbare Auslassöffnung, die Mischvorrichtung, die Fördervorrichtung, die Einlassdüse und/oder die Zuführvorrichtung.

Bevorzugt wird vor und/oder während dem Applizieren in der Steuereinheit ein Datenmodell, welches wenigstens einen Teil des zu erzeugenden Objekts oder das gesamte zu erzeugende Objekt repräsentiert, gespeichert und unter Berücksichtigung des Datenmodells die während der Applikation einzuhaltenden Parameter und/oder Sollwerte festgelegt.

Dabei werden bevorzugt für verschiedene Abschnitte des zu erzeugenden Objekts unterschiedliche Parameter und/oder Sollwerte festgelegt. Bei den Parametern oder Sollwerten handelt es sich beispielsweise um die Förderrate der Fördereinrichtung, die Grösse der Öffnung der Auslassdüse, das Mischverhältnis der wenigstens zwei Komponenten, die Zugaberate des Zusatzmittels über die Einlassdüse, den Druck des abbindenden Baustoffs, die Viskosität des abbindenden Baustoffs, die Temperatur des abbindenden Baustoffs und/oder die Umgebungstemperatur desjenigen Bereichs, in welchem das zu erzeugende Objekt erzeugt wird.

Weiter kann es vorteilhaft sein, wenn bei der Festlegung der Parameter oder Sollwerte eine oder mehrere Eigenschaften der wenigstens zwei Komponenten des aushärtbaren Baustoffs, beispielsweise die chemische Zusammensetzung, eine vorgängig bestimmte Fliessgrenze und/oder eine vorgängig bestimmte Viskosität, berücksichtigt werden.

Gemäss einer bevorzugten Ausführungsform wird die Grösse der Durchlassöffnung des steuerbaren Auslasses in Abhängigkeit der Grösse und/oder Struktur des zu erzeugenden Objekts gesteuert, insbesondere mit der Steuereinheit. Dadurch kann die zu erzeugende Struktur präziser und kontrollierter hergestellt werden.

Gemäss einer weiteren bevorzugten Ausführungsform wird die Förderleistung der Fördervorrichtung in Abhängigkeit einer gemessenen chemischen und/oder physikalischen Eigenschaft des aushärtenden Baustoffs, insbesondere in Abhängigkeit des Drucks des aushärtenden Baustoffs in der Förderleitung und/oder im Druckkopf, gesteuert und/oder geregelt, insbesondere mit der Steuereinheit.

Bevorzugt wird dabei in der Förderleitung und/oder dem Druckkopf ein im Wesentlichen konstanter Druck aufrechterhalten, dies insbesondere so, dass bei gegebener Auslassöffnung ein definierter Fluss an abbindendem Material aus dem Druckkopf austritt. Dadurch kann die Präzision bei der Herstellung des zu erzeugenden Objekts verbessert werden.

Die Steuerung und/oder Regelung erfolgt mit Vorteil so, dass die gemessene chemische und/oder physikalische Eigenschaft, insbesondere der Druck und/oder die Viskosität, des abbindenden Baustoffs einen definierten Sollwert aufweist, wobei im Besonderen für verschiedene Abschnitte des zu erzeugenden Objekts unterschiedliche Sollwerte definiert sein können oder sind.

Es kann auch vorteilhaft sein, die Förderleistung der Fördervorrichtung in Bezug auf einen Füllstand der Komponenten in einem oder mehreren Behältnissen, in welchen die Komponenten gelagert werden, zu regeln. Damit kann vermieden werden, dass das System leer läuft und Luft eingetragen wird.

Im Besonderen wird eine Zugaberate wenigstens einer Komponente des Baustoffs, insbesondere eines Zusatzmittels, in Abhängigkeit der chemischen und/oder physikalischen Eigenschaft des abbindenden Baustoffs und/oder in Anhängigkeit der Grösse und/oder Struktur des zu erstellenden Objekts, geregelt und/oder gesteuert. Dies insbesondere mit der Steuereinheit und/oder in Echtzeit.

Dadurch können die Zusammensetzung und Beschaffenheit des abbindenden Baustoffs konstant gehalten und/oder gezielt angepasst werden. Die Steuerung und/oder Regelung erfolgt dabei mit Vorteil so, dass die gemessene chemische und/oder physikalische Eigenschaft des aushärtenden Baustoffs einen definierten Sollwert aufweist, wobei im Besonderen für verschiedene Abschnitte des zu erzeugenden Objekts unterschiedliche Sollwerte definiert sein können oder sind.

Gemäss einer weiteren bevorzugten Ausführungsform wird ein aus dem Druckkopf austretender Volumenstrom des aushärtenden Baustoffs in Abhängigkeit der Grösse und/oder der Struktur eines mit dem aushärtenden Baustoff zu erstellenden Objekts gesteuert und/oder geregelt.

Die Förderleistung der Fördervorrichtung wird im Besonderen in Abhängigkeit einer gemessenen chemischen und/oder physikalischen Eigenschaft des aushärtenden Baustoffs und/oder in Abhängigkeit der Grösse und/oder Struktur eines mit dem aushärtenden Baustoff zu erzeugenden Objekts gesteuert und/oder geregelt. Die Steuerung und/oder Regelung erfolgt dabei mit Vorteil so, dass die gemessene chemische und/oder physikalische Eigenschaft des aushärtenden Baustoffs einen definierten Sollwert aufweist, wobei im Besonderen für verschiedene Abschnitte zu erzeugenden Objekts unterschiedliche Sollwerte definiert sein können oder sind.

Weiter ist es bevorzugt, wenn die Zugaberate eines Zusatzmittels, insbesondere eines Rheologiehilfsmittels und/oder eines Verzögerers, über die Einlassdüse in Abhängigkeit einer chemischen und/oder physikalischen Eigenschaft des aushärtenden Baustoffs, z.B. der Viskosität, und/oder in Abhängigkeit der Grösse und/oder der Struktur eines mit dem abbindendem Baustoff zu erstellenden Objekts gesteuert und/oder geregelt wird. Die Steuerung und/oder Regelung der Zugaberate des Zusatzmittels erfolgt dabei mit Vorteil so, dass die gemessene chemische und/oder physikalische Eigenschaft des aushärtenden Baustoffs einen definierten Sollwert aufweist, wobei im Besonderen für verschiedene Abschnitte zu erzeugenden Objekts unterschiedliche Sollwerte definiert sein können oder sind.

Ebenfalls vorteilhaft ist es, wenn die Applikation des abbindenden Baustoffs unter Berücksichtigung der Umgebungstemperatur eines Bereichs, in welcher das zu erstellende Objekts erzeugt wird, gesteuert und/oder geregelt wird. Dabei kann z.B. die Zugaberate eines Zusatzmittels über die Einlassdüse, die Förderleistung der Fördervorrichtung und/oder die Zugaberate wenigstens einer Komponente des Baustoffs in Abhängigkeit der Umgebungstemperatur eines Bereichs, in welcher das zu erstellende Objekts erzeugt wird, gesteuert und/oder geregelt.

Weiter ist es bevorzugt, wenn die Förderrate und die Bewegung des Druckkopfs aufeinander abgestimmt erfolgt. Dies insbesondere so, dass pro Wegeinheit, welche der Druckkopf zurücklegt, ein konstante Menge an aushärtendem Baustoff aus dem Druckkopf austritt.

Gemäss einer besonders bevorzugten Ausführungsform wird während der Applikation dem abbindendem Baustoff in der Mischvorrichtung, insbesondere in einem dynamischen Mischer, ein Fliessmittel beigemischt und optional wird dem abbindendem Baustoff ein Rheologiehilfsmittel und/oder ein Verzögerer über die Einlassdüse beigegeben. In Stromrichtung wird dabei zuerst das Fliessmittel zugegeben und anschliessend das Rheologiehilfsmittel und/oder der Verzögerer. Die Menge und/oder Zugaberate des Fliessmittels, des Rheologiehilfsmittels und/oder des Verzögerers wird im Besonderen in Abhängigkeit einer gemessenen chemischen und/oder physikalischen Eigenschaft des aushärtenden Baustoffs und/oder in Abhängigkeit der Grösse und/oder Struktur des zu erzeugenden Objekts festgelegt. Dies insbesondere wie vorstehend beschrieben.

Die Zuführvorrichtung ist mit Vorteil derart ausgebildet, dass eine feste Komponente des Baustoffs über einen ersten Einlass und eine flüssige Komponente über einen zweiten Einlass in die Mischvorrichtung zugegeben werden kann. Damit kann z.B. eine feste Komponente einer mineralischen Bindemittelzusammensetzung, welche beispielsweise ein mineralisches Bindemittel und Aggregate in fester Form umfasst, über den ersten Einlass in die Mischvorrichtung gegeben werden, während eine flüssige Komponente, z.B. Wasser, separat von der ersten Komponenten über den zweiten Einlass zugegeben werden kann. Somit lässt sich das Mischverhältnis der beiden Komponenten jederzeit anpassen.

Nach einer weiteren vorteilhaften Ausführungsform ist die Zuführvorrichtung derart ausgebildet, dass wenigstens drei separate Komponenten des Baustoffs über wenigstens drei getrennte Einlässe der Mischvorrichtung in diese zugegeben werden können. Dadurch lässt sich die Zusammensetzung der aushärtbaren Baustoffs noch besser kontrollieren. Beispielsweise kann eine feste Komponente einer mineralischen Bindemittelzusammensetzung, welche beispielsweise ein mineralisches Bindemittel und Aggregate in fester Form umfasst, über den ersten Einlass in die Mischvorrichtung gegeben werden. Eine zweite Komponente, welche z.B. Fasern umfasst, kann dann separat über den zweiten Einlass in die Mischvorrichtung gegeben werden, während die dritte Komponente, z.B. Wasser, separat von den anderen beiden Komponenten über den dritten Einlass in die Mischvorrichtung zugegeben werden kann. Somit lässt sich das Mischverhältnis aller drei Komponenten, z.B. Bindemittel mit Aggregaten, Fasern und Wasser, jederzeit anpassen.

Grundsätzlich können auch vier, fünf oder noch mehr separate Einlässe vorliegen. Damit kann der aushärtbare Baustoff hinsichtlich seiner Zusammensetzung während der Applikation nahezu beliebig angepasst werden.

Falls das System eine Einlassdüse umfasst, verfügt die Zuführvorrichtung mit Vorteil über einen weiteren Einlass, welcher z.B. mit einem Zusatzmittelreservoir korrespondiert, sowie einen weiteren Auslass, welcher mit der Einlassdüse verbunden ist.

Unter "Fasern" werden im vorliegenden Dokument Materialien verstanden, deren Verhältnis von Länge zu Durchmesser beziehungsweise von Länge zu Äquivalentdurchmesser mindestens 10:1 beträgt. Dieses Verhältnis wird auch als Formfaktor bezeichnet.

Unter "Äquivalentdurchmesser einer Faser" wird im vorliegenden Dokument der Durchmesser verstanden, den ein Kreis aufweist, der die selbe Fläche hat, wie die Querschnittsfläche einer Faser mit nicht rundem Querschnitt.

Die Zuführvorrichtung verfügt insbesondere über wenigstens eine oder mehrere Dosiervorrichtungen. Die wenigstens eine Dosiervorrichtung ist derart ausgebildet, dass eine oder mehrere der Komponenten des aushärtbaren Baustoffs kontrolliert und/oder mit einer definierten Zugaberate in die Mischvorrichtung zudosiert werden können.

Besonders vorteilhaft verfügt jeder Einlass der Mischvorrichtung über eine separate und individuell ansteuerbare Dosiervorrichtung.

Falls das System eine Einlassdüse umfasst, verfügt die Zuführvorrichtung mit Vorteil über eine weitere Dosiervorrichtung, welche derart ausgebildet ist, dass ein Zusatzmittel kontrolliert und/oder mit einer definierten Zugaberate in die Einlassdüse zugegeben werden kann.

Beispielsweise handelt es sich bei der Dosiervorrichtung um eine gravimetrische Dosiervorrichtung. Solche Dosiervorrichtungen haben sich vorliegend als gut handhabbar aber dennoch präzise herausgestellt.

Das Vorsehen einer gravimetrischen Dosiervorrichtung bietet den Vorteil, dass eine Komponente, insbesondere eine feste Komponente, in genauen Mengen dem System zugeführt werden kann. Dadurch kann eine Qualität des Baustoffes konstant gehalten werden.

In einer beispielhaften Weiterbildung umfasst die Dosiervorrichtung einen Trichter und eine Fördereinrichtung. Die Fördereinrichtung kann insbesondere als Förderschnecke oder Förderband ausgebildet sein.

Das Vorsehen eines Trichters und einer Fördereinrichtung hat den Vorteil, dass dadurch grosse Einheiten einer Komponente des Baustoffes, wie beispielsweise grosse Gebinde oder Säcke (in der Fachsprache "Big Bag" genannt) verwendet werden können. Beispielsweise können solche grossen Einheiten in der einem Behältnis aufgehängt werden und über einen Trichter einer Fördereinrichtung zugeführt werden. Der Trichter hat dabei den Vorteil, dass er als Speicher benutzt werden kann, und so einen Zeitabschnitt bei einem Austausch der Gebinde des ersten Bestandteils der ersten Komponente des Baustoffes überbrücken kann. Durch die Fördereinrichtung kann beispielsweise eine erste Komponente der Dosiervorrichtung zugeführt werden.

Bei einer vorteilhaften Ausführungsform liegt die Fördervorrichtung in der Mischvorrichtung, in der Förderleitung und/oder im Druckkopf vor oder die Fördervorrichtung ist ein Bestandteil dieser Elemente. Damit ist eine kompakte Bauweise möglich. Es sind aber auch Anordnungen der Fördervorrichtung möglich.

Im Besonderen liegt im Bereich des Druckkopfs und/oder darin integriert ein Förderelement vor, welches insbesondere bei einer Bewegung des Druckkopfs mitbewegt wird. Dadurch kann die Förderleistung besonders effektiv konstant gehalten werden.

Ganz besonders bevorzugt liegen zwei separate Fördervorrichtungen vor, wobei bevorzugt eine erste Fördervorrichtung in der Mischvorrichtung integriert ist, während die zweite Fördervorrichtung im Druckkopf integriert ist. Dies ergibt eine besonders gleichmässige Förderung des aushärtenden Baustoffs.

Als Fördervorrichtung kommt insbesondere eine Pumpe zum Einsatz, beispielsweise eine Förderschnecke.

In einer beispielhaften Ausführungsform umfasst die Mischvorrichtung eine Rührwelle, welche auf einem ersten Abschnitt mit Rührelementen bestückt ist und an welcher auf einem zweiten Abschnitt ein Förderelement angeordnet ist.

Es hat sich gezeigt, dass einerseits die Komponenten des aushärtbaren Baustoffs auf diese Art und Weise in der Mischvorrichtung vermischt und zugleich in vermischter Form aus der Mischvorrichtung gefördert werden können.

In einer vorteilhaften Weiterbildung sind die Rührelemente als Stifte ausgebildet. In einer weiteren vorteilhaften Ausbildung haben die Rührelemente ein Aussengewinde, so dass die Rührelemente in Vertiefungen mit Innengewinden auf der Rührwelle eingedreht werden können.

In einer beispielhaften Weiterbildung ist das Förderelement als Förderschnecke ausgebildet.

In einer beispielhaften Weiterbildung ist der erste Abschnitt der Rührwelle in einem ersten Bereich einer Trommel des Mischers angeordnet, in welchem die Trommel zumindest zwei Einlässe hat. Zudem ist der zweite Abschnitt der Rührwelle in einem zweiten Bereich der Trommel angeordnet, in welchem die Trommel einen Auslass hat.

In einer beispielhaften Weiterbildung ist das Förderelement von der Rührwelle in Richtung einer Achse der Rührwelle abziehbar.

In einer beispielhaften Weiterbildung umfasst das Förderelement ein Befestigungselement zur Verriegelung des Förderelementes auf der Rührwelle.

In einer beispielhaften Weiterbildung ist eine Trommel des Mischers einstückig und/oder röhrenförmig ausgebildet.

Im Besonderen verfügt das zur Durchführung des erfindungsgemässen Verfahrens verwendete System über wenigstens ein Behältnis, in welchem wenigstens eine der beiden Komponenten des Baustoffs aufbewahrt werden kann. Besonders bevorzugt verfügt das erfindungsgemässe System über wenigstens zwei Behältnisse, in welchen die wenigstens zwei Komponenten des Baustoffs räumlich getrennt aufbewahrt werden können.

Weiter kann das erfindungsgemässe System über ein Reservoir für ein Zusatzmittel verfügen. In einem solchen Reservoir kann ein Zusatzmittel, welches beispielsweise über die Einlassdüse zugegeben wird, aufbewahrt werden.

Es ist aber auch möglich, eine oder mehrere der Komponenten und/oder ein Zusatzmittel über einen Transportleitung aus einer externen Quelle zuzuführen.

Das eine oder die mehreren Behältnisse korrespondieren bevorzugt mit der Zuführvorrichtung, so dass eine in einem Behältnis vorliegende Komponente direkt über einen zugeordneten Einlass in die Mischvorrichtung gegeben werden kann.

Bei einer solchen Anordnung kann das erfindungsgemässe System nach einem Beschicken der Behältnisse und/oder einem Anschluss an eine Transportleitung im Wesentlichen ohne weitere Eingriffe einen definierten Teil oder das gesamte zu erzeugende Objekt herstellen.

In einer besonders vorteilhaften Ausführungsform gilt:
- eine erste Komponente des Baustoffs liegt in fester Form vor und umfasst ein mineralisches Bindemittel sowie optional Aggregate, insbesondere Kies, Sand, Gesteinskörnungen und/oder Füller, sowie optional ein Beton- und/oder Mörtelzusatzmittel;
- eine zweite Komponente des Baustoffs liegt in flüssiger Form vor und umfasst Wasser;
- eine optionale dritte Komponente liegt vor, welche einen Verflüssiger umfasst;
- optional liegt ein Zusatzmittel vor, welches über die Einlassdüse zugegeben werden kann und bevorzugt ein Fliessmittel, ein Rheologiehilfsmittel und/oder einen Verzögerer umfasst;
wobei die Komponenten und gegebenenfalls das Zusatzmittel in räumlich voneinander getrennten Behältnissen vorliegen, welche Bestandteil der Zuführeinrichtung sind und/oder mit dieser kommunizieren.

Besonders bevorzugt ist die erste Komponente eine trockene mineralische Bindemittelzusammensetzung umfassend Zement und mineralische Füllstoffe wobei die Bindemittelzusammensetzung mindestens einen auf Aluminiumsulfat basierenden Abbinde-Beschleuniger, mindestens einen Superverflüssiger auf Basis eines Polycarboxylatethers und mindestens ein Rheologiehilfsmittel umfasst, wobei der Polycarboxylatether, angenommen alle Carbonsäuregruppen liegen als freie Säure vor, mindestens 1 mmol, insbesondere mindestens 1.2 mmol, im Speziellen mindestens 1.8 mmol, Carbonsäuregruppen pro Gramm trockenen Polycarboxylatether aufweist.

Unter "trockener mineralischer Bindemittelzusammensetzung" versteht man im vorliegenden Dokument eine rieselfähige mineralische Bindemittelzusammensetzung mit einem Feuchtegehalt von unter 0.5 Gewichts-%.

Unter "wasserhaltige mineralische Bindemittelzusammensetzung" versteht man im vorliegenden Dokument eine mit Wasser angemischte mineralische Bindemittelzusammensetzung, insbesondere in fluider Form. Entsprechend handelt es sich bei einer "wasserhaltigen mineralischen Bindemittelzusammensetzung" um einen aushärtbaren Baustoff in abbindendem Zustand.

Unter "Polycarboxylatether" versteht man im vorliegenden Dokument ein Kammpolymer umfassend ein Rückgrat aus Kohlenwasserstoffen mit daran gebundenen Carbonsäuregruppen oder deren Salzen und ebenfalls an das Rückgrat kovalent gebundenen Polyalkylenglykol-Seitenketten. Die Seitenketten sind dabei insbesondere über Ester-, Ether-, Imid- und/oder Amidgruppen an das Polycarboxylat-Rückgrat gebunden.

Die Menge an Carbonsäuregruppen in dem Polycarboxylatether wird als Millimol Carbonsäuregruppen in einem Gramm des Polycarboxylatethers (mmol/g) verstanden. Hierfür werden möglicherweise vorhandene Salze der Carbonsäuren zu den Carbonsäuregruppen gezählt und das Gewicht des Polycarboxylatethers wird in nicht neutralisierter Form eingesetzt. Carbonsäureester werden hier nicht zu den Carbonsäuregruppen gezählt, auch nicht, wenn sie in latenter Form, das heisst, wenn sie in alkalischem Medium bei pH 12 hydrolysiert werden können, vorliegen.

Unter "Formstabilität" wird im vorliegenden Dokument eine Materialeigenschaft verstanden, bei der das Material nach der Formgebung die einzelnen Dimensionen um maximal 10% verändert, sofern keine äussere Kraft ausser der Schwerkraft auf das geformte Material einwirkt.

Unter "Standfestigkeit" wird im vorliegenden Dokument jene Festigkeit verstanden, die ein härtbares Material nach der Applikation vor dem Aushärten aufweist.

Als Zement kann jeder verfügbare Zementtyp oder eine Mischung von zwei oder mehreren Zementtypen verwendet werden, beispielsweise die unter der DIN EN 197-1 klassifizierten Zemente: Portlandzement (CEM I), Portlandkompositzement (CEM II), Hochofenschlackezement (CEM III), Pozzolanischer Zement (CEM IV) und Kompositzement (CEM V). Selbstverständlich sind Zemente, die gemäß einem alternativen Standard, wie beispielsweise dem ASTM-Standard oder dem indischen Standard, produziert werden, gleichermassen geeignet. Bevorzugt ist Portlandzement CEM I oder CEM II gemäss DIN EN 197-1. Besonders bevorzugt ist Portlandzement CEM I 42.5 oder CEM I 52.5. Solche Zemente geben gute Festigkeiten und gute Verarbeitbarkeit.

Für die Herstellung von weissen oder eingefärbten Formkörpern ist es vorteilhaft, wenn ein Weisszement CEM I oder CEM II verwendet wird.

Die trockene mineralische Bindemittelzusammensetzung enthält vorteilhaft noch mindestens ein latent hydraulisches oder pozzolanisches Bindemittel, insbesondere Metakaolin und/oder Silicastaub. Das latent hydraulische oder pozzolanische Bindemittel ist bevorzugt in 0.1 bis 10 Gewichts-%, insbesondere in 0.5 bis 5 Gewichts-%, in der Bindemittelzusammensetzung vorhanden. Diese Zusätze können die Verarbeitbarkeit der wässrigen Bindemittelzusammensetzung und die Festigkeit der ausgehärteten Bindemittelzusammensetzung erhöhen.

Die trockene mineralische Bindemittelzusammensetzung enthält mineralische Füllstoffe. Füllstoffe sind chemisch inerte feste partikuläre Materialien und werden in verschiedenen Formen, Grössen und als unterschiedliche Materialien angeboten, die von feinsten Sandpartikeln bis grossen groben Steinen variieren. Geeignet sind prinzipiell alle Füllstoffe die üblicherweise für Beton und Mörtel verwendet werden. Beispiele von besonders geeigneten Füllstoffen sind Gesteinskörnungen, Kies, Sand, insbesondere Quarzsand, Kalksteinsand und Schlackesand, zerkleinerte Steine, kalzinierte Kiesel oder leichte Füllstoffe wie Blähton, Blähglas, Schaumglas, Bimsstein, Perlit und Vermiculit. Weitere vorteilhafte Füllstoffe sind feine oder sehr feine Füllstoffe wie gemahlener Kalkstein oder Dolomit, Aluminiumoxid, Silicastaub (amorphes SiO₂), Quarzmehl oder gemahlene Stahlschlacke ohne oder mit nur schwach latent hydraulischer Reaktivität.

Bevorzugte Füllstoffe sind ausgewählt aus der Gruppe bestehend aus Quarzsand, Quarzmehl, Kalksteinsand, gemahlener Kalkstein und gemahlene Stahlschlacke. Bevorzugt umfasst der Füllstoff mindestens einen fein gemahlenen kristallinen Füllstoff, insbesondere Kalkstein. Dieser kann die frühe Festigkeitsentwicklung der mit Wasser vermischten Bindemittelzusammensetzung fördern.

Die Partikelgrösse der Füllstoffe richtet sich nach der Anwendung und liegt im Bereich von 0.1 µm bis 32 mm und mehr. Bevorzugt werden unterschiedliche Partikelgrössen gemischt um die Eigenschaften der Bindemittelzusammensetzung optimal einzustellen. Es können auch Füllstoffe aus unterschiedlichen Materialien gemischt werden. Die Partikelgrösse kann mit Hilfe einer Siebanalyse bestimmt werden.
Bevorzugt sind Füllstoffe mit Partikelgrössen von maximal 8 mm, mehr bevorzugt maximal 5 mm, noch mehr bevorzugt maximal 3.5 mm, am meisten bevorzugt maximal 2.2 mm, insbesondere maximal 1.2 mm oder maximal 1.0 mm.
Die Partikelgrösse wird insbesondere durch die geplante Schichtdicke der aufgetragenen Schichten im 3D-Druck bzw. dem generativen Fertigungsverfahren bestimmt. So ist eine maximale Partikelgrösse der Füllstoffe sinnvollerweise maximal so gross wie die Schichtdicke bei der Applikation.

Bevorzugt enthält die trockene mineralische Bindemittelzusammensetzung 20 bis 40 Gewichts-%, insbesondere 22 bis 36 Gewichts-%, bezogen auf das Gesamtgewicht der trockenen Bindemittelzusammensetzung, feine Füllstoffe mit einer Partikelgrösse von unter 0.125 mm.

Geeignete Füllstoffe mit kleiner Partikelgrösse sind insbesondere feine Quarzsande, Quarzmehl, gemahlenes Calciumcarbonat oder gemahlene Stahlschlacke.
Bevorzugt enthält die mineralische Bindemittelzusammensetzung 1 bis 10 Gewichts-%, mehr bevorzugt 2 bis 5 Gewichts-%, gemahlenes Calciumcarbonat mit einer Partikelgrösse von unter 0.01 mm. Das feine Calciumcarbonat verbessert die Verarbeitbarkeit der mit Wasser vermischten Bindemittelzusammensetzung und kann die Festigkeitsentwicklung der Bindemittelzusammensetzung erhöhen.

Wässrige Bindemittelzusammensetzungen mit solchen Partikelgrössen sind gut förderbar, lassen sich in dem kontinuierlichen Mischer gut mit dem wässrigen Beschleuniger vermischen und ergeben nach der Applikation eine sehr homogene Oberfläche.

In speziellen Anwendungen können auch Füllstoffe mit Partikelgrössen bis 32 mm, mehr bevorzugt bis 20 mm, am meisten bevorzugt bis 16 mm, verwendet werden.

Bevorzugt sind die mineralischen Füllstoffe in 45 bis 85 Gewichts-%, insbesondere 50 bis 80 Gewichts-%, bezogen auf das Gesamtgewicht der trockenen mineralischen Bindemittelzusammensetzung vorhanden.

Die trockene mineralische Bindemittelzusammensetzung enthält bevorzugt einen auf Aluminiumsulfat basierenden Beschleuniger. Der Beschleuniger ist ein rieselfähiges Pulver und enthält vorteilhaft mindestens 30 Gewichts-%, bevorzugt mindestens 35 Gewichts-%, mehr bevorzugt mindestens 40 Gewichts-%, Aluminiumsulfat, gerechnet als Aluminiumsulfat-Hydrat Al₂(SO₄)₃·16 H₂O.

Der Beschleuniger kann vorteilhaft neben dem Aluminiumsulfat noch weitere Bestandteile wie Aminoalkohole, Alkali- und Erdalkalinitrate, Alkali- und Erdalkalinitrite, Alkali- und Erdalkalithiocyanate, Alkali- und Erdalkalihalogenide, Alkalikarbonate, Glyzerin, Glyzerinderivate, weitere Aluminiumsalze, Aluminiumhydroxide, Alkali- und Erdalkalihydroxide, Alkali- und Erdalkalisilikate, Alkali- und Erdalkalioxide oder Alkali- und Erdalkalisalze der Ameisensäure, oder Mischungen davon, enthalten.

In einer speziell bevorzugten Bindemittelzusammensetzung besteht der Beschleuniger zu mindestens 90 Gewichts-%, insbesondere zu mindestens 95 Gewichts%, aus Aluminiumsulfat-Hydrat oder ist Aluminiumsulfat-Hydrat.

Ein geeigneter Beschleuniger ist Sigunit®-P10 AF, erhältlich bei Sika Australien.

Bevorzugt ist die Bindemittelzusammensetzung frei von Aminoalkoholen. Aminoalkohole haben einen intensiven unangenehmen Geruch, können die Gesundheit gefährden und zu unkontrolliertem Ansteifen der Bindemittelzusammensetzung nach dem Vermischen mit Wasser führen.

Bevorzugt ist der auf Aluminiumsulfat basierende Beschleuniger in 0.1 bis 2 Gewichts-%, mehr bevorzugt in 0.3 bis 1.5 Gewichts-%, insbesondere in 0.4 bis 1.0 Gewichts-%, bezogen auf das Gesamtgewicht der trockenen Mörtelmischung, vorhanden.

Eine solche Dosierung des Beschleunigers führt zu einer raschen Festigkeitsentwicklung der mit Wasser vermischten Bindemittelzusammensetzung, ohne die Verarbeitbarkeit für den Druckvorgang einzuschränken, insbesondere in Kombination mit Polycarboxylatethern.

Die Bindemittelzusammensetzung umfasst mindestens einen Superverflüssiger auf Basis eines Polycarboxylatethers. Der mindestens eine Polycarboxylatether enthält Carbonsäuregruppen in Form von freien, das bedeutet nicht neutralisierten, Carbonsäuregruppen und/oder in Form ihrer Alkali- und/oder Erdalkalisalze. Bevorzugt sind Polycarboxylatether die neben den Carbonsäuregruppen keine weiteren anionische Gruppen aufweisen.
Weiter bevorzugt sind Polycarboxylatether, deren Seitenketten zu mindestens 80 mol-%, bevorzugt mindestens 90 mol-%, speziell bevorzugt zu 100 mol-% aus Ethylenglykoleinheiten bestehen.

Bevorzugt weisen die Seitenketten ein mittleres Molekulargewicht Mw im Bereich von 500 bis 10'000 g/mol, bevorzugt 800 bis 8'000 g/mol, speziell bevorzugt 1'000 bis 5'000 g/mol, auf. Es können auch Seitenketten mit unterschiedlichen Molekulargewichten in dem Polycarboxylatether vorhanden sein.

Speziell bevorzugt sind Polycarboxylatether, die aus Methacrylsäure- und/oder Acrylsäure-Einheiten und Methyl-Polyalkylenglykol-Methacrylaten oder -Acrylaten aufgebaut ist. Bevorzugt weist der mindestens eine Polycarboxylatether ein mittleres Molekulargewicht Mw von 8'000 bis 200'000 g/mol, insbesondere 10'000 bis 100'000 g/mol, gemessen gegen Polyethylenglykol-Standards, auf.

Solche Polycarboxylatether sind besonders gut geeignet, eine gute Verarbeitbarkeit der Bindemittelzusammensetzung auch bei tiefem Wassergehalt zu ermöglichen. Ein tiefer Wassergehalt bewirkt eine hohe Festigkeit eines ausgehärteten Formkörpers.

In Kombination mit dem auf Aluminiumsulfat basierenden Beschleuniger wirken solche Polycarboxylatether besonders gut als Mittel zur Steuerung des Ansteifens der wässrigen Bindemittelzusammensetzung.

Der mindestens eine Polycarboxylatether kann als wässrige Lösung in die Bindemittelzusammensetzung eingebracht werden, beispielsweise durch Aufsprühen auf die Füllstoffe vor dem Vermischen mit dem mineralischen Bindemittel.
Bevorzugt liegt der mindestens eine Polycarboxylatether als Polymerpulver in der trockenen Bindemittelzusammensetzung vor.

In einer bevorzugten Ausführungsform der Erfindung weist der mindestens eine Polycarboxylatether eine Block- oder Gradientenstruktur auf. Unter "Polycarboxylatether mit Block- oder Gradientenstruktur" wird im vorliegenden Dokument ein Polymer verstanden, in dem die Monomereinheiten in nicht-statistischer Abfolge vorliegen, das heisst die Abfolge wird nicht zufällig erhalten. In dem Polycarboxylatether mit Block- oder Gradientenstruktur umfasst mindestens ein Abschnitt Monomereinheiten umfassend Polyalkylenglykol-Seitenketten und keine oder kaum Monomereinheiten mit Carboxylatgruppen und mindestens ein Abschnitt Monomereinheiten mit Carboxylatgruppen und keine oder kaum Monomereinheiten mit Polyalkylenglykol-Seitenketten. Solche Block- oder Gradientenpolymere weisen daher Abschnitte mit hoher Dichte an anionischen Gruppen und Abschnitte, die keine oder nur wenige anionischen Gruppen enthalten, auf.

Überraschenderweise entfalten Polycarboxylatether mit Block- oder Gradientenstruktur sehr rasch ihre Wirkung als Verflüssiger. Sie sind daher besonders gut geeignet für Anwendungen, in denen die Mischzeit von Bindemittelzusammensetzung und Wasser sehr kurz ist, insbesondere für kontinuierliches Mischen.

Polycarboxylatether mit Block- oder Gradientenstruktur bewirken zudem eine tiefe Viskosität der Bindemittelzusammensetzung. Dies verbessert die Pumpbarkeit. Ebenfalls überraschend hält die verflüssigende Wirkung der Polycarboxylatether mit Block- oder Gradientenstruktur in den erfindungsgemässen Bindemittelzusammensetzungen nur einige Minuten an, was für den 3D-Druck vorteilhaft ist, weil dadurch eine gute Verarbeitbarkeit der wässrigen Bindemittelzusammensetzung direkt nach dem Mischen und eine gute Standfestigkeit nach der Applikation erreicht werden kann.

Bevorzugt ist der mindestens eine Polycarboxylatether mit 0.02 bis 5 Gewichts-%, bevorzugt mit 0.05 bis 4 Gewichts-%, insbesondere mit 0.1 bis 3 Gewichts-%, gerechnet als trockenes Polymer, bezogen auf das Gesamtgewicht der trockenen Bindemittelzusammensetzung, vorhanden.

Vorteilhaft erfolgt die Dosierung des mindestens einen Polycarboxylatethers in der Bindemittelzusammensetzung angepasst an die jeweilige Druckaufgabe. So werden vorteilhaft vor dem Druck die Druckparameter, wie typischerweise die gewünschte Höhe des Formkörpers, die Dicke der aufgetragenen Schichten, die Druckgeschwindigkeit und die zu erwartende Umgebungstemperatur, erfasst und anschliessend mittels Erfahrungswerten, Tabellen und/oder Computerprogramm die optimale Menge des Polycarboxylatethers in der Bindemittelzusammensetzung ermittelt.

Vorteilhaft wird die Gesamtmenge des Polycarboxylatethers in der trockenen Bindemittelzusammensetzung bereitgestellt.

Es kann aber auch vorteilhaft sein, insbesondere bei mengenmässig kleinen Anwendungen und/oder wenn die Druckparameter variabel sind, speziell durch Temperaturschwankungen, Wartepausen oder zusätzliche Fertigungsschritte bei der Formgebung, wenn nur ein Teil des Polycarboxylatethers in der trockenen Bindemittelzusammensetzung vorhanden ist und ein weiterer Teil, jeweils angepasst an die aktuellen Druckbedingungen, während oder nach dem Vermischen mit Wasser zugegeben wird.

Vorteilhaft wird der weitere Teil des Polycarboxylatethers zusammen mit dem Anmachwasser in einem kontinuierlichen Mischprozess zugegeben.

Die Bindemittelzusammensetzung kann so in grosser Menge hergestellt werden, was vorteilhaft ist, und die Anpassung an die jeweiligen Druckbedingungen erfolgt einfach und kostengünstig an der Baustelle.

Die Bindemittelzusammensetzung enthält bevorzugt mindestens ein organisches und/oder anorganisches Rheologiehilfsmittel.

Geeignete Rheologiehilfsmittel sind insbesondere modifizierte Stärke, Amylopektin, modifizierte Cellulose, mikrobielle Polysaccharide, Galactomannane, Alginate, Tragakant, Polydextrose, Superabsorber oder mineralische Verdickungsmittel.

Bevorzugt ist das Rheologiehilfsmittel ausgewählt ist aus der Gruppe bestehend aus modifizierten Stärken, modifizierten Cellulosen, mikrobiellen Polysacchariden, Superabsorber und mineralischen Verdickungsmitteln.
Bevorzugt beträgt die Gesamtmenge an Rheologiehilfsmittel 0.01 bis 5 Gewichts-%, bezogen auf das Gesamtgewicht der trockenen Bindemittelzusammensetzung.

Die modifizierte Stärke ist bevorzugt ein Stärkeether, insbesondere Hydroxypropylstärke, Carboxymethylstärke oder Carboxymethylhydroxypropylstärke. Die modifizierte Stärke ist bevorzugt in 0.01 bis 2 Gewichts-%, bezogen auf das Gesamtgewicht der trockenen Bindemittelzusammensetzung, vorhanden.

Die modifizierte Cellulose ist bevorzugt Methylcellulose, Ethylcellulose, Hydroxymethylcellulose, Hydroxyethylcellulose oder Methylhydroxyethylcellulose und ist bevorzugt in 0.01 bis 2 Gewichts-%, bezogen auf das Gesamtgewicht der trockenen Bindemittelzusammensetzung, vorhanden.
Das mikrobielle Polysaccharid ist bevorzugt Welan Gum, Xanthan Gum oder Diutan Gum und ist bevorzugt in 0.01 bis 0.1 Gewichts-%, bezogen auf das Gesamtgewicht der trockenen Bindemittelzusammensetzung, vorhanden.

Der Superabsorber ist bevorzugt ausgewählt aus der Gruppe umfassend Polyacrylamid, Polyacrylnitril, Polyvinylalkohol, Isobutylen-Maleinsäureanhydrid-Copolymere, Polyvinylpyrrolidon, Homo- und Copolymere von monoethylenisch ungesättigter Carbonsäuren wie (Meth)acrylsäure, Crotonsäure, Sorbinsäure, Maleinsäure, Fumarsäure, Itaconsäure, bevorzugt Polyacrylsäure, welche teilweise oder vollständig neutralisiert sein können, und Co- und Terpolymere der genannten monoethylenisch ungesättigten Carbonsäuren mit Vinylsulfonsäure, (Meth)acrylamidoalkylsulfonsäuren, Allylsulfonsäure, Vinyltoluolsulfonsäure, Vinylphosphonsäure, (Meth)acrylamid, N-alkyliertem (Meth)acrylamid, N-Methylol(meth)acrylamid, N-Vinylformamid, N-Vinylacetamid, Vinylpyrrolidon, Hydroxyalkyl(meth)acrylat, Ethylacrylat, Methylacrylat, (Meth)acrylsäureester von Polyethyleneglycolmonoallylethern, Vinylacetat und/oder Styrol.

Die Superabsorber-Homo- und Copolymere können linear oder verzweigt sein, die Copolymere können statistisch oder als Block- oder Gradientenpolymere vorliegen. Bevorzugt sind die Homo- und Copolymere zusätzlich noch vernetzt.

Bevorzugt ist der Superabsorber Polyacrylsäure, welche teilweise oder vollständig neutralisiert sein kann und vernetzt ist.

Bevorzugt ist der Superabsorber, wenn vorhanden, in 0.01 bis 0.5 Gewichts-%, insbesondere in 0.05 bis 0.3 Gewichts-%, bezogen auf das Gesamtgewicht der trockenen Bindemittelzusammensetzung, vorhanden.

Als mineralische Verdickungsmittel können beispielsweise spezielle Silikate oder Tonminerale verwendet werden. Bevorzugt sind Bentonite und Sepiolith. Das mineralische Verdickungsmittel ist bevorzugt in 0.1 bis 1 Gewichts-%, bezogen auf das Gesamtgewicht der trockenen Bindemittelzusammensetzung, vorhanden.

Bevorzugt enthält die Bindemittelzusammensetzung mindestens zwei, mehr bevorzugt mindestens drei, unterschiedliche Rheologiehilfsmittel.

Das Rheologiehilfsmittel ist besonders geeignet, die Formstabilität der wasserhaltigen Bindemittelzusammensetzung zu gewährleisten und einer aufgebrachten Schicht genügend Standfestigkeit zu verleihen um eine oder mehrere weitere Schichten zu tragen, ohne die Form wesentlich zu ändern, bevor die Hydratation des Zementes einsetzt.

Bevorzugte Kombinationen von zwei oder mehreren Rheologiehilfsmitteln sind:
- modifizierte Cellulose und mikrobielles Polysaccharid;
- modifizierte Cellulose und Superabsorber;
- mikrobielles Polysaccharid und Superabsorber;
- mikrobielles Polysaccharid, Superabsorber und mineralisches Verdickungsmittel;
- modifizierte Cellulose, mikrobielles Polysaccharid und Superabsorber;
- modifizierte Cellulose, mikrobielles Polysaccharid, Superabsorber und mineralisches Verdickungsmittel.

Durch die Kombination von zwei oder mehr Rheologiehilfsmitteln können die unterschiedlichen Verdickungseigenschaften der Rheologiehilfsmittel optimal aufeinander abgestimmt werden. Dies bewirkt eine gute Verarbeitbarkeit bei guter Standfestigkeit der wasserhaltigen Bindemittelzusammensetzung.

Speziell bevorzugt ist eine Kombination von Rheologiehilfsmitteln, die mindestens einen Superabsorber umfasst.

Der Superabsorber wirkt zusätzlich noch als Mittel zur Schwindreduktion, was besonders vorteilhaft ist.

Bevorzugt enthält die Bindemittelzusammensetzung noch 0.1 bis 5 Gewichts-%, bevorzugt 0.5 bis 3 Gewichts-%, Calciumsulfoaluminat, bezogen auf das Gesamtgewicht der trockenen Bindemittelzusammensetzung.

Das Calciumsulfoaluminat kann, speziell in der bevorzugten Dosierung, einerseits die frühe Festigkeitsentwicklung der wässrigen Bindemittelzusammensetzung steigern und gleichzeitig das Schwinden reduzieren.
Ein höherer Gehalt an Calciumsulfoaluminat in der Bindemittelzusammensetzung kann die Endfestigkeit eines gedruckten Formkörpers reduzieren und erhöht die Kosten für die Zusammensetzung.

Überraschenderweise kann durch die spezielle Kombination von Calciumsulfoaluminat und Rheologiehilfsmittel das Schwinden der Bindemittelzusammensetzung nach der Applikation stark reduziert werden. Schwinden kann zur Bildung von Rissen in dem hergestellten Formkörper führen. Risse können die Dauerhaftigkeit der gedruckten Strukturen reduzieren und stören den optischen Eindruck.
Besonders vorteilhaft ist das Calciumsulfoaluminat ein Calciumsulfoaluminat-Zement.

Die Bindemittelzusammensetzung enthält vorteilhaft noch mindestens ein weiteres Additiv zur Reduktion des Schwindens ausgewählt aus der Gruppe bestehend aus Glykolen, Polyglykolen und Wasser speichernden Materialien, wie insbesondere poröse Steine, gemahlene Ziegel, und/oder gemahlener Zementstein.

Die Bindemittelzusammensetzung enthält bevorzugt noch mindestens einen Entschäumer, insbesondere ausgewählt aus der Gruppe bestehend aus Öl-basierten Entschäumern, insbesondere auf Mineralöl, Pflanzenöl oder Weissöl basierte Entschäumer, welche ein Wachs und/oder hydrophobe Kieselsäure enthalten können, Silikon-basierten Entschäumern, welche beispielsweise durch Alkoxylierung oder Fluorinierung modifiziert sein können, Alkylestern von Phosphor- oder Phosphonsäure, alkoxylierten Polyolen, insbesondere ethoxylierte Diole, Fettsäure-basierten Entschäumern, insbesondere mono- und Diglyceride von Fettsäuren und alkoxylierten Fettalkoholen, und Mischungen davon.
Bevorzugt ist der Entschäumer ausgewählt aus der Gruppe umfassend ethoxyliertes 2,4,7,9-Tetramethyl-5-decyn-4,7-diol, eine Kombination von Fettalkoholalkoxylaten und Polysiloxan und einer Kombination von Mineralöl und einem Silikonöl enthaltend hydrophobe Kieselsäure.

Der Entschäumer ist bevorzugt in 0.01 bis 1 Gewichts-%, insbesondere in 0.1 bis 0.8 Gewichts-%, bezogen auf das Gesamtgewicht der trockenen Bindemittelzusammensetzung, vorhanden.

Der Einsatz eines Enschäumers ist vorteilhaft, weil dadurch die Bildung von Luftporen beim Vermischen der trockenen Bindemittelzusammensetzung mit Wasser verhindert oder vermindert wird. Luftporen können das Fördern der wasserhaltigen Bindemittelzusammensetzung zum Druckkopf stören und reduzieren im ausgehärteten Formkörper die Festigkeit, und Poren stören den optischen Eindruck des Formkörpers.

Überraschend bewirkt der Entschäumer zusätzlich noch eine Reduktion des Schwindens und damit der Rissbildung im ausgehärteten Formkörper.

Optional kann die mineralische Bindemittelzusammensetzung noch wenigstens ein weiteres Additiv, beispielsweise ein Betonzusatzmittel und/oder ein Mörtelzusatzmittel, enthalten. Das wenigstens eine weitere Additiv umfasst insbesondere ein Fliessmittel, einen Verzögerer, einen Entschäumer, ein Netzmittel, Fasern, einen Farbstoff, ein Konservierungsmittel, einen weiteren Beschleuniger, ein Dispersionspolymer, ein kationisches Polymer, ein kationisches Polykondensat, ein kationisches Kammpolymer, einen Luftporenbildner, einen weiteren Schwindreduzierer oder einen Korrosionsinhibitor oder Kombinationen davon.

Das Fliessmittel ist insbesondere Natriumglukonat, ein Lignosulfonat, ein sulfoniertes Naphthalin-Formaldehyd-Kondensat, ein sulfoniertes Melamin-Formaldehyd-Kondensat, ein sulfoniertes Vinylcopolymer, ein Polyalkylenglykol mit Phosphonatgruppen, ein Polyalkylenglykol mit Phosphatgruppen oder ein aromatisches Kondensat mit Phosphonatgruppen und Polyalkyleneglykol-Ketten.

Der Einsatz von Erhärtungsverzögerern kann vorteilhaft sein, da dadurch die Verarbeitungsdauer der wasserhaltigen Bindemittelzusammensetzung verlängert wird. Der Erhärtungsverzögerer ist bevorzugt eine Hydroxycarbonsäure, insbesondere Weinsäure, Zitronensäure oder Gluconsäure, ein Zucker, insbesondere Saccharose, ein Phosphat oder ein Phosphonat, oder deren Salze oder Mischungen davon.

Eine bevorzugte Bindemittelzusammensetzung umfasst oder besteht aus:
- 10 bis 50 Gewichts-%, bevorzugt 12 bis 40 Gewichts-%, insbesondere 15 bis 35 Gewichts-%, Zement, insbesondere Portlandzement,
- 0.1 bis 5 Gewichts-%, bevorzugt 0.5 bis 3 Gewichts-%, Calciumsulfoaluminat,
- 0 bis 10 Gewichts-%, bevorzugt 0.1 bis 5 Gewichts-%, latent hydraulische Bindemittel, insbesondere Metakaolin und/oder Silicastaub,
- 45 bis 85 Gewichts-%, bevorzugt 50 bis 80 Gewichts-%, mineralische Füllstoffe,
- 0.1 bis 2 Gewichts-% mindestens eines Beschleunigers auf Basis von Aluminiumsulfat,
- 0.02 bis 5 Gewichts-% mindestens eines Polycarboxylatethers,
- 0.01 bis 2 Gewichts-% mindestens eines Rheologiehilfsmittels,
- 0.01 bis 1 Gewichts-% mindestens eines Entschäumers und
- 0 bis 10 Gewichts-% weitere Additive,
bezogen auf das Gesamtgewicht der trockenen Bindemittelzusammensetzung.

Die Dosierung des Beschleunigers und des Polycarboxylatethers erfolgt bevorzugt in solch einer Menge, dass eine mit Wasser vermischte Bindemittelzusammensetzung mehrere Sekunden bis einige Minuten gut formbar bleibt. Dadurch können die Schichten homogen aufgetragen werden, bilden einen guten Zusammenhalt und die Oberfläche des hergestellten Formkörpers, kann, sofern gewünscht, noch nachbehandelt, beispielsweise geglättet, werden.

Durch Vermischen der trockenen mineralischen Bindemittelzusammensetzung mit 10 bis 25 Gewichts-%, bevorzugt 12 bis 22 Gewichts-%, mehr bevorzugt 14 bis 20 Gewichts-%, Wasser, und optional noch 0.01 bis 2 Gewichts-% Polycarboxylatether, bezogen auf das Gesamtgewicht der trockenen Bindemittelzusammensetzung, wird eine für das Verfahren optimale wasserhaltige mineralische Bindemittelzusammensetzung in abbindendem Zustand erhalten.

Das Vermischen mit Wasser erfolgt bevorzugt mit einem kontinuierlichen Mischer. Dadurch wird eine hohe Fertigungsgeschwindigkeit gewährleistet. Zudem muss bei einem möglichen Unterbruch kein, in einer nicht kontinuierlichen Mischeinrichtung bereits gemischtes Material entsorgt werden.

Die Festigkeitsentwicklung der wasserhaltigen Bindemittelzusammensetzung wird vorteilhaft vor deren Applikation bestimmt. Dies hilft, um die Druckparameter festlegen zu können und/oder die Bindemittelzusammensetzung, insbesondere den Gehalt an Polycarboxylatether in der trockenen und/oder wasserhaltigen Bindemittelzusammensetzung anzupassen.

Vorteilhaft liegt der Abbindebeginn der wasserhaltigen Bindemittelzusammensetzung zwischen etwa 10 Minuten und 1 Stunde, und das Abbindeende zwischen etwa 30 Minuten und 3 Stunden, gemessen gemäss DIN EN 196-3 bei 20°C mit einer automatischen Vicat-Apparatur.

Vorteilhaft erreicht die Bindemittelzusammensetzung eine Stunde nach der Applikation eine Festigkeit von mindestens 0.05 MPa, bevorzugt mindestens 0.08 MPa, insbesondere mindestens 0.1 MPa, und nach 3 Stunden, bevorzugt 2 Stunden, mindestens 0.5 MPa, insbesondere 1 MPa. Die Festigkeit kann mit einer Penetrationsmethode, wie beispielsweise in ASTM C 403 beschrieben, bestimmt werden.

Eine solche Festigkeitsentwicklung der wasserhaltigen Bindemittelzusammensetzung ist besonders vorteilhaft für eine effiziente und homogene Herstellung von Formkörpern.

Mit dem erfindungsgemässen Verfahren, insbesondere in Kombination mit der vorstehend beschriebenen trockenen mineralischen Bindemittelzusammensetzung, können überraschend schnell Formkörper durch schichtweisen Auftrag erstellt werden.

Die Druckgeschwindigkeit, das heisst die Geschwindigkeit der horizontalen Bewegung des Druckkopfes, beträgt bevorzugt mindestens 20 mm pro Sekunde, bevorzugt mindestens 50 mm pro Sekunde, insbesondere mindestens 100 mm pro Sekunde, und kann bis 500 mm pro Sekunde und mehr betragen.

Die vertikale Druckgeschwindigkeit ist abhängig von der horizontalen Dimension des Formkörpers und der Dicke der einzelnen applizierten Schichten. Bevorzugt liegt der Zeitraum zwischen dem Auftragen der unteren Schicht und der darüber liegenden nächsten Schicht zwischen etwa 1 Sekunde und 30 Minuten, insbesondere zwischen 10 Sekunden und 10 Minuten.

Ein weiterer Aspekt der vorliegenden Erfindung ist ein Formkörper erhältlich durch oder erhalten durch ein Verfahren, wie es vorstehend beschrieben ist. Im Besonderen ist der Formkörper mit einer mineralischen Bindemittelzusammensetzung als aushärtbarer Baustoff hergestellt, besonders bevorzugt mit einer wie vorstehen beschriebenen trockenen mineralischen Bindemittelzusammensetzung.

Die Höhe einer einzelnen Schicht des Formkörpers, typischerweise in einer Richtung im Wesentlichen senkrecht zu den durch einzelne Schichten gebildeten Ebenen gemessen, insbesondere in vertikaler Richtung, beträgt bevorzugt 0.2 mm bis 200 mm, mehr bevorzugt 1 mm bis 100 mm, insbesondere 2 mm bis 50 mm.
Die Gesamthöhe des Formkörpers oder die Dicke aller Einzelschichten des Formkörpers zusammengenommen beträgt bevorzugt 0.01 m bis 100 m oder mehr, mehr bevorzugt 0.1 m bis 80 m, noch mehr bevorzugt 0.3 m bis 30 m, insbesondere 0.5 m bis 10 m.

Bevorzugt hat der Formkörper eine Höhe von mindestens 0.5 m, mehr bevorzugt mindestens 1 m, im Speziellen mindestens 1.5 m oder 2 m.

Die Oberfläche des Formkörpers kann, solange sie noch bearbeitbar ist, mit geeigneten Werkzeugen geglättet, ausgebessert oder speziell verformt werden. Dies kann als Teil der maschinellen Fertigung erfolgen, oder manuell als separater Schritt. Die Oberfläche kann auch mit einer funktionellen oder dekorativen Beschichtung versehen werden, beispielsweise mit einer Farbe.

Der Formköper kann auch, solange er noch bearbeitbar ist, mit geeigneten Werkzeugen geschnitten werden. So können Löcher, insbesondere für Festeröffnungen, Türöffnungen, Leitungsdurchgänge oder auch Schnitte, insbesondere für spätere Bearbeitungsschritte, in den Formkörper eingebracht werden.

Der mit dem erfindungsgemässen Verfahren hergestellte Formkörper kann nahezu jede beliebige Form aufweisen. Der Formkörper ist beispielsweise ein Bauwerk, ein Fertigteil für ein Bauwerk, ein Bauelement, ein Mauerwerk, eine Brücke, eine Säule, ein Dekorationselement wie beispielsweise künstliche Berge, Riffe oder Skulpturen, ein Becken, ein Brunnen oder eine Wanne. Dabei kann der Formkörper eine Vollform oder eine Hohlform, mit oder ohne Boden, darstellen.

Einzelheiten und Vorteile der Erfindung werden im Folgenden anhand von Ausführungsbeispielen und mit Bezug auf schematische Zeichnungen beschrieben.

### Kurze Beschreibung der Figuren

Es zeigen:
- Fig. 1: eine schematische Darstellung eines beispielhaften Systems zum Applizieren eines Baustoffes;
- Fig. 2: schematische Darstellung eines beispielhaften Mischers;
- Fig. 3: eine schematische Darstellung eines beispielhaften Wellenmoduls und Trommelmoduls eines Mischkammermoduls;
- Fig. 4: eine schematische Darstellung eines erfindungsgemässen Applikationsverfahrens.

### Ausführungsbeispiele

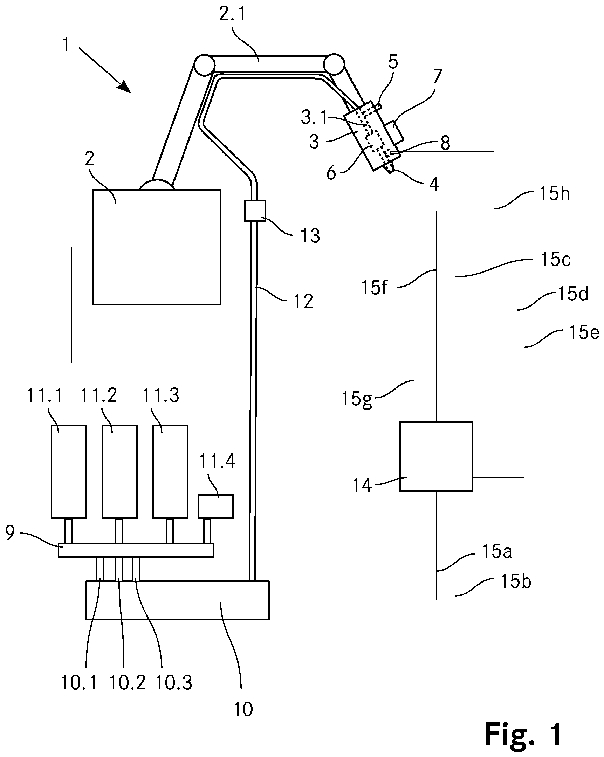

In Fig. 1 ist schematisch ein beispielhaftes System 1 zur Durchführung eines erfindungsgemässen Verfahrens zum Applizieren eines aushärtbaren Baustoffes dargestellt.

Das System 1 umfasst eine Bewegungsvorrichtung 2 mit einem beweglichen Arm 2.1. Am freien Ende des Arms 2.1 ist ein Druckkopf 3 angebracht, welcher durch den Arm 2.1 in allen drei Raumdimensionen bewegbar ist. Damit kann der Druckkopf 3 an eine beliebige Position im Arbeitsbereich der Bewegungsvorrichtung 2 bewegt werden.

Der Druckkopf 3 weist im Innern einen von der dem Arm 2.1 zugewandten Stirnseite (in Fig. 1 oben) zur gegenüberliegenden und freien Stirnseite durchgehenden rohrförmigen Durchlass 3.1 zur Durchleitung von aushärtbarem Baustoff auf. Am freien Ende mündet der Durchlass 3.1 in einen steuerbaren Auslass 4 in Form einer kontinuierlich öffen- und schliessbaren Düse.

Eine Einlassdüse 5 zur Zugabe eines Additivs mündet in einen dem Arm 2.1 zugewandten Bereich seitlich in den Durchlass 3.1. Durch die Einlassdüse 5 kann dem sich durch den Durchlass 3.1 bewegenden aushärtbaren Baustoff bei Bedarf ein Zusatzmittel, beispielsweise ein Rheologiehilfsmittel, zugegeben werden.

Im Innern des Druckkopfs 3 in Bezug auf die Einlassdüse stromabwärts ist des Weiteren ein statischer Mischer 6 im Durchlass 3.1 angeordnet, welcher den aushärbaren Baustoff und das Additiv beim Durchfluss zusätzlich vermischt.

Im Bereich des steuerbaren Auslasses 4 ist zudem eine Messeinheit 8 zur Bestimmung des Drucks im rohrförmigen Durchlass 3.1 angeordnet. Eine Abtastrate der Messeinheit 8 beträgt z.B. 10 Hz.

Am Druckkopf 3 ist zudem eine Vorrichtung 7 zur Entlüftung des aushärtbaren Baustoffs angebracht. Die Vorrichtung ist als Vakuumbehandlungsvorrichtung ausgestaltet und ermöglicht es, den Luftanteil im aushärtbaren Baustoff zu reduzieren. Hierfür kann beispielsweise ein Abschnitt der Wandung des Durchlasses 3.1 als gaspermeable Membran ausgestaltet werden, so dass durch Anlegen eines Unterdrucks ausserhalb des Durchlasses 3.1 Luft aus dem aushärtbaren Baustoff gezogen wird.

Das System 1 zum Applizieren eines aushärtbaren Baustoffes verfügt zudem über eine Zuführvorrichtung 9, welche eingangsseitig mit drei Behältnissen 11.1, 11.2, 11.3 und einem Zusatzmittelreservoir 11.4 korrespondiert. In jedem der drei Behältnisse 11.1, 11.2, 11.3 befindet sich je eine Komponente des aushärtbaren Baustoffs. Die erste Komponente, welche im ersten Behältnis 11.1 vorliegt, ist eine trockene mineralische Bindemittelzusammensetzung (Details zur Zusammensetzung siehe weiter hinten). Die zweite Komponente, welche im zweiten Behältnis 11.2 vorliegt, besteht beispielsweise aus Wasser. Bei der im dritten Behältnis 11.3 vorliegenden dritten Komponente handelt es sich z.B. um ein Fliessmittel in Form eines Polycarboxylatethers. Im Zusatzmittelreservoir 11.4 liegt z.B. ein Rheologiehilfsmittel in Form von modifizierter Cellulose und/oder einem mikrobiellen Polysaccharid vor.

Ausgangsseitig verfügt die Zuführvorrichtung 9 über drei separate Auslässe, welche mit je einem von drei Einlässen 10.1, 10.2, 10.3 einer Mischvorrichtung 10 verbunden sind. Die Zuführvorrichtung 9 verfügt zudem über einzeln ansteuerbare Dosiervorrichtungen (in Fig. 1 nicht gezeigt), so dass sich die einzelnen Komponenten in den einzelnen Behältnissen 11.1, 11.2, 11.3 individuell in die Mischvorrichtung 10 dosieren lassen.

Ein weiterer Auslass der Zuführvorrichtung ist mit der Einlassdüse 5 verbunden (in Fig. 1 nicht dargestellt), so dass über eine weitere Dosiervorrichtung der Zuführvorrichtung 9 Zusatzmittel aus dem Zusatzmittelreservoir 11.4 in die Einlassdüse 5 gefördert werden kann.

Die Mischvorrichtung 10 ist als dynamischer Mischer ausgebildet und umfasst nebst diesem eine integrierte Fördervorrichtung in Form eines Schneckenförderers. In der Mischvorrichtung werden die einzeln zudosierten Komponenten miteinander vermischt und in die ausgangsseitig an der Mischvorrichtung angebrachte flexible Leitung 12 gefördert. Im Betrieb kann die Vermischung und Förderung des aushärtbaren Baustoffs kontinuierlich erfolgen.

Über die flexible Leitung 12, welche mit an der dem Arm 2.1 zugewandten Stirnseite des Druckkopfs in den rohrförmigen Durchlass 3.1 mündet, kann der aushärtbare Baustoff in den Druckkopf 3 gefördert und durch den steuerbaren Auslass 4 kontinuierlich appliziert werden.

Ebenfalls Bestandteil des Systems 1 ist eine Messeinheit 13, welche im Bereich zwischen der Mischvorrichtung 10 und dem Druckkopf 3 in die Förderleitung 12 integriert ist. Die Messeinheit beinhaltet beispielsweise einen Ultraschalltransducer, welcher zur Bestimmung der Fliesseigenschaften des aushärtbaren Materials ausgebildet ist. Eine Abtastrate der Messeinheit 13 beträgt z.B. 10 Hz.

Eine zentrale Steuereinheit 14 des Systems 1 umfasst einen Prozessor, eine Speichereinheit sowie mehrere Schnittstellen zum Empfang von Daten und mehrere Schnittstellen zur Ansteuerung von einzelnen Komponenten des Systems 1.

Die Mischvorrichtung 10 ist dabei über eine erste Steuerleitung 15a mit der Steuereinheit 14 verbunden, während die Zuführvorrichtung über eine zweite Steuerleitung 15b mit der Steuereinheit 14 verbunden ist. Dadurch lassen sich die einzelnen Komponenten in den Behältnissen 11.1, 11.2, 11.3 über die zentrale Steuereinheit entsprechend vorgegebenen und in der Steuereinheit gespeicherten Rezepturen in die Mischvorrichtung 10 dosieren und mit einstellbaren Förderraten in die flexible Leitung 12 fördern.

Der steuerbaren Auslass 4, die Einlassdüse 5, sowie die Vorrichtung 7 zum Entlüftung des aushärtbaren Baustoffs am Druckkopf sind je über eine separate Steuerleitung 15c, 15d, 15e ebenfalls mit der Steuereinheit 14 verbunden und können durch diese gesteuert bzw. kontrolliert werden.

Über eine weitere Steuerleitung 15g mit der Steuereinheit 14 verbunden ist auch die Bewegungsvorrichtung 2. Damit kann über die Steuereinheit 14 die Bewegung des Druckkopfs 3 gesteuert werden.

Die Messeinheit 8 ist mit einer Datenleitung 15h mit der Steuereinheit 14 verbunden, so dass in der Messeinheit erfasste Druckdaten in die Steuereinheit 14 übermittelt werden können.

Analog ist die Messeinheit 13 mit einer Datenleitung 15f mit der Steuereinheit 14 verbunden, so dass in der Messeinheit erfasste Daten, welche die Fliesseigenschaften charakterisieren, in die Steuereinheit 14 übermittelt werden können.

Die Steuereinheit 14 ist dabei beispielsweise so programmiert, dass:
(i) dass die Zugaberaten der drei Komponenten des aushärtbaren Baustoffs mit der Zuführvorrichtung 9 in Abhängigkeit der über die Messeinheit 13 ermittelten Fliesseigenschaften des aushärtbaren Baustoffs in der flexiblen Leitung gesteuert werden;
(ii) die in der Mischvorrichtung 10 integrierte Fördervorrichtung in Abhängigkeit des über die Messeinheit 8 ermittelten Drucks 8 sowie der Struktur des mit dem aushärtbaren Baustoff zu erzeugenden Objekts gesteuert wird;
(iii) die Zugaberate des Zusatzmittels über die Einlassdüse 5 in Abhängigkeit der über die Messeinheit 13 ermittelten Fliesseigenschaften des aushärtbaren Baustoffs sowie der Struktur des zu erstellenden Objekts kontrolliert wird;
(iv) der Grad der Entlüftung des aushärtbaren Baustoffs in der Vorrichtung 7 in Abhängigkeit der über die Messeinheit 13 ermittelten Fliesseigenschaften des aushärtbaren Baustoffs gesteuert wird;
(v) die Bewegungsvorrichtung 2 und damit die Position des Druckkopfs 3 in Abhängigkeit eines im Datenspeicher der Steuereinheit 14 gespeicherten Modells des zu erzeugenden Objekts gesteuert wird.

Die als erste Komponente verwendete trockene mineralische Bindemittelzusammensetzung weist z.B. die in Tabelle 1 beschriebene Zusammensetzung auf.

**Tabelle 1: Zusammensetzung der trockenen Bindemittelzusammensetzung**

| **Komponente** | **Gewichts-% in der Bindemittelzusammensetzung** |
|---|---|
| Zement CEM I 52.5 | 25 |
| Metakaolin | 4.5 |
| Betoflow® D | 5 |
| Nekafill® 15 | 20 |
| Sand 0-1 mm | 42 |
| Denka CSA#20 | 2 |
| Sika® ViscoCrete®-225P | 0.25 |
| Carbowet® 4000 | 0.5 |
| Modifizierte Cellulose | 0.05 |
| Anorganischer Verdicker | 0.1 |
| Superabsorber | 0.1 |
| Aluminiumsulfat | 0.5 |

Dabei wurden folgende Materialen verwendet:
- Aluminiumsulfat ist Al₂(SO₄)₃·18H₂O, erhältlich bei Merck, Schweiz.
- Betoflow® D ist ein feines Calciumcarbonat-Pulver von 1-5 µm Partikelgrösse, erhältlich bei Omya.
- Nekafill® 15 ist ein Kalksteinmehl, erhältlich bei Kalkfabrik Netstal.
- Sika® ViscoCrete®-225P ist ein pulverförmiger Superverflüssiger auf Basis eines Polycarboxylatethers, erhältlich bei Sika.
- Carbowet® 4000 ist ein Entschäumer, erhältlich bei Air Products Chemicals Europe.
- Denka CSA #20 ist ein Schwindreduzierer auf Basis Calciumsulfoaluminatzement, erhältlich bei Newchem, Schweiz.

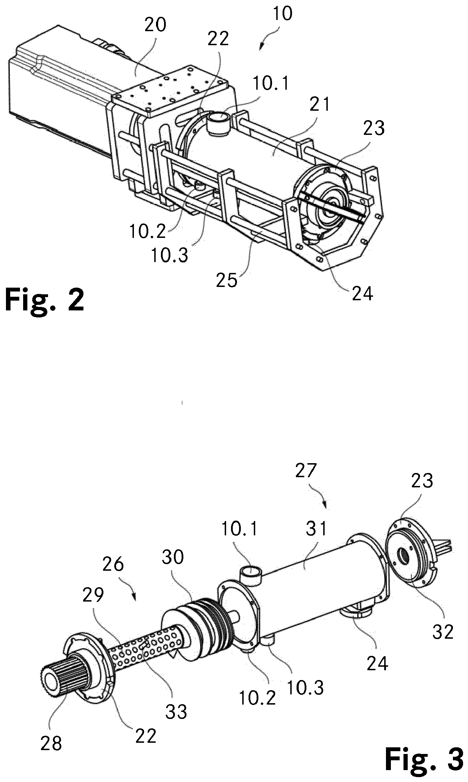

In Fig. 2 ist eine beispielhafte Ausgestaltung der Mischvorrichtung 10 aus Fig. 1 dargestellt. Die Mischvorrichtung 10 umfasst einen Antrieb 20, eine Trommel 21, einen proximalen Verschluss 22, einen distalen Verschluss 23, einen Auslass 24, einen ersten Einlass 10.1, einen zweiten Einlass 10.2, einen dritten Einlass 10.3 und eine Stützeinrichtung 25.

In diesem Ausführungsbeispiel ist der distale Verschluss 23 über die Stützeinrichtung 25 mit dem Antrieb 20 verbunden, so dass eine Rührwelle (nicht sichtbar in dieser Abbildung) sowohl im proximalen Verschluss 22 als auch im distalen Verschluss 23 gelagert werden kann.

Bei einer Verwendung der Mischvorrichtung 10 wird beispielsweise die erste Komponente über den ersten Einlass 10.1 zugeführt, die zweite Komponente über den zweiten Einlass 10.2 und die dritte Komponente über den dritten Einlass 10.3.

In Fig. 3 ist die Mischvorrichtung 10 ohne das Antriebsmodul 20 in einem aufgetrennten Zustand abgebildet. In diesem Ausführungsbeispiel umfasst die Mischvorrichtung 10 ein Wellenmodul 26 und ein Trommelmodul 27.

Das Wellenmodul 26 umfasst ein Kupplungselement 28 zur mechanischen Kopplung an die Antriebseinheit 20, den proximalen Verschluss 22, eine Rührwelle 29 sowie ein Förderelement 30.

Das Trommelmodul 27 umfasst in diesem Ausführungsbeispiel eine einstückig ausgebildete röhrenförmige Trommel 31 sowie einen distalen Verschluss 23. Die Trommel 31 hat dabei einen ersten Einlass 10.1, einen zweiten Einlass 10.2 und einen dritten Einlass, 10.3, welche alle in einem ersten Endbereich der Trommel 31 angeordnet sind. Der Auslass 24 ist dabei an einem zweiten Endbereich der Trommel 31 angeordnet.

Der distale Verschluss 23 hat in diesem Ausführungsbeispiel eine Opferplatte 32, welche auf einer Seite des distalen Verschlusses 23 angeordnet ist, welche der Trommel 31 zugewandt ist. Die Opferplatte 32 wird in einem Betrieb des Systems abgenutzt und kann bei Bedarf ausgewechselt werden. Dadurch kann der distale Verschluss 23 über einen längeren Zeitraum verwendet werden.

Das Förderelement 30 ist in diesem Ausführungsbeispiel als Förderschnecke ausgebildet. Dabei ist das Förderelement 30 auf der Rührwelle 29 aufsteckbar angeordnet. Zudem ist das Förderelement 30 mit einem Verriegelungselement auf der Rührwelle 29 gesichert (nicht ersichtlich auf dieser Abbildung).

Im Bereich des Wellenmoduls 26 sind zudem radial von der Rührwelle 29 abstehende Stifte 33 als Rührelemente befestigt (in Fig. 3 ist lediglich ein einzelner Stifte gezeigt).

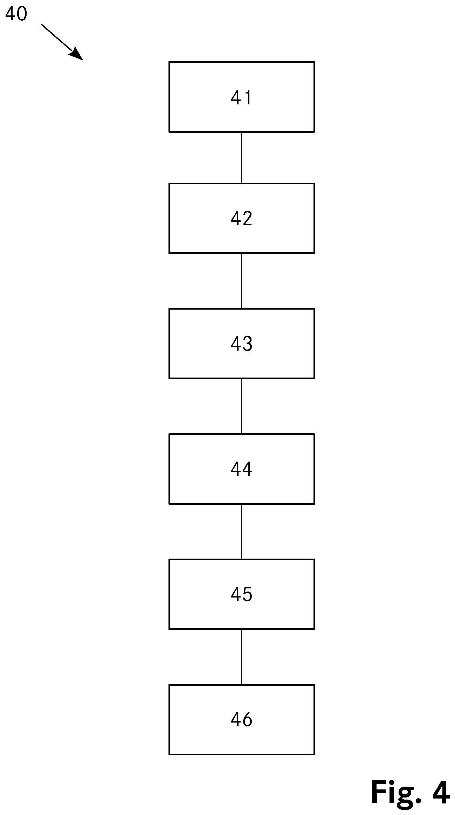

Fig. 4. veranschaulicht ein erfindungsgemässes Verfahren. In einem ersten Schritt 41 wird im Behältnis 11.1 die trockene mineralische Bindemittelzusammensetzung aus Tabelle 1 (siehe oben) als erste Komponente bereitgestellt. In Behältnis 11.2 wird Wasser als zweite Komponente vorgelegt und in Behältnis 11.3 ein Fliessmittel als dritte Komponente.

Sodann werden die Komponenten im zweiten Schritt 42 kontinuierlich über die Zuführvorrichtung 9 in die Mischvorrichtung 10 gegeben und dort im nächsten Schritt 43 unter Erhalt einer mit Wasser angemachten mineralischen Bindemittelzusammensetzung miteinander vermischt. Die trockene Bindemittelzusammensetzung mit der in Tabelle 1 angegebenen Zusammensetzung, wird dabei mit einer solchen Menge Wasser in der Mischvorrichtung 10 vermischt, dass ein Gewichtsverhältnis von Wasser zu trockener Bindemittelzusammensetzung von etwa 0.16 erhalten wird. Das Fliessmittel wird so zudosiert, dass eine vorgegebene Fliessgrenze erreicht wird. Die mit Wasser angemachte mineralische Bindemittelzusammensetzung entspricht dabei einem aushärtbaren Baustoff in abbindendem Zustand.

Anschliessend wird die angemachte Bindemittelzusammensetzung im vierten Schritt 44 mit der in der Mischvorrichtung 10 integrierten Schneckenförderer über die Förderleitung 12 dem Druckkopf 3 zugeführt.

Während der Zuführung zum Druckkopf 3 wird der angemachten Bindemittelzusammensetzung in Abhängigkeit der über die Messeinheit 13 ermittelten Fliesseigenschaften der Bindemittelzusammensetzung in Schritt 45 über die Einlassdüse 5 ein Zusatzmittel in Form eines Rheologiehilfsmittels, beispielsweise eine modifizierte Cellulose und/oder ein mikrobielles Polysaccharid, zudosiert und/oder die Bindemittelzusammensetzung mit der Vorrichtung 7 entlüftet. Damit werden die chemischen und/oder physikalischen Eigenschaften bei Bedarf angepasst, so dass vorgegebene Sollwerte für die Fliesseigenschaften eingehalten werden.

Anschliessend erfolgt in Schritt 46 die schichtweise Applikation der Bindemittelzusammensetzung über den Auslass 4 des Druckkopfs, so dass das zu erzeugende Objekt hergestellt wird.

Sämtliche Schritte im Verfahren 40 inklusive der Steuerung des Druckkopfs werden mit der Steuereinheit 14 gesteuert und kontrolliert.

Konkret wurde als Beispiel ein Rohr von 2 m Höhe mit etwa 600 mm Durchmesser hergestellt. Die einzelnen applizierten Schichten wiesen eine Breite von etwa 30 mm Breite und eine Höhe von ca. 10 mm auf. Die horizontale Geschwindigkeit des Druckkopfes betrug etwa 40 mm pro Sekunde. Der Druck des Formkörpers benötigte 2 Stunden und 40 Minuten. Die Höhe der unteren Schichten und der oberen Schichten unterschieden sich nicht mehr als 5%. Der gedruckte Formkörper wies eine wellenförmige, sehr einheitliche Oberfläche ohne sichtbare Fehlstellen auf. Auch nach 3 Tagen Lagerung bei 25°C und etwa 40% relativer Luftfeuchte zeigte der Formkörper keine sichtbaren Risse. Etwa 16 Stunden nach dem Auftragen der letzten Schicht wurde der Hohlkörper mit Hilfe von Tragriemen und einem Kran auf eine Transportpalette gehoben, ohne dass Schäden an dem gedruckten Formkörper entstanden.

Nach etwa vier Tagen wurde der Formkörper mit Hilfe eines schweren Hammers zerstört und die Bruchstücke optisch analysiert. Die Bruchflächen wiesen eine einheitliche Oberfläche, ohne Lufteinschlüsse oder Fehlstellen auf. Die Bruchflächen zeigten keine bevorzugte Orientierung, das heisst, die aufgetragenen Schichten wiesen einen gleich guten Verbund untereinander wie innerhalb der gleichen Schicht auf.

Die vorstehend beschriebenen Ausführungsformen sind lediglich als illustrative Beispiele zu verstehen, welche im Rahmen der Erfindung beliebig abgewandelt werden können.

So kann beispielsweise der statische Mischer 6 weggelassen werden, so dass im Druckkopf weder ein statischer noch ein dynamischer Mischer vorliegt.

Zusätzlich oder anstelle der in der Mischvorrichtung 10 integrierten Fördervorrichtung können eine oder mehrere weitere Fördervorrichtungen in der Förderleitung 12 und/oder im Druckkopf 3 vorgesehen werden. Dabei kann es sich auch um andere Fördervorrichtungen handeln als um Förderschnecken.

Ebenfalls möglich ist es, im Bereich des Druckkopfs 3 und/oder in der Förderleitung 12 anstelle oder zusätzlich zu den Messeinheiten 8, 13 andere Messeinheiten vorzusehen, welche z.B. eine Temperaturmessung ermöglichen. Auch denkbar ist es, die Messeinheit 13 in der Förderleitung vollständig wegzulassen oder im Druckkopf zu integrieren.

Die Mischvorrichtung 10 kann auch weniger oder mehr Einlässe aufweisen, so dass zusätzliche Komponenten, welche in zusätzlichen Behältnissen vorliegen, zudosiert werden können.

Anstelle eines oder mehrere der Behältnisse 11.1, 112, 11.3 können auch Anschlüsse an externe Quellen, z.B. an einen Wasseranschluss, vorliegen.

Auch möglich ist es, die Steuereinheit anders zu programmieren, beispielsweise so dass ein Volumenstrom durch die Förderleitung 12 und/oder den Druckkopf 3 berücksichtigt wird.

### Bezugszeichenliste

- 1: System
- 2: Bewegungsvorrichtung
- 2.1: beweglicher Arm
- 3: Druckkopf
- 3.1: Durchlass
- 4: steuerbarer Auslass
- 5: Einlassdüse
- 6: statischer Mischer
- 7: Entlüftungsvorrichtung
- 8: Druckmesseinheit
- 9: Zuführvorrichtung
- 10: Mischvorrichtung
- 10.1: erster Einlass
- 10.2: zweiter Einlass
- 10.3: dritter Einlass
- 11.1: erstes Behältnis
- 11.2: zweites Behältnis
- 11.3: drittes Behältnis
- 11.4: Zusatzmittelreservoir
- 12: flexible Leitung
- 13: Messeinheit mit Ultraschalltransducer
- 14: Steuereinheit
- 15a..h: Steuer- und Datenleistungen
- 20: Antrieb
- 21: Trommel
- 22: proximaler Verschluss
- 23: distaler Verschluss
- 24: Auslass
- 25: Stützeinrichtung
- 26: Wellenmodul
- 27: Trommelmodul
- 28: Kupplungselement
- 29: Rührwelle
- 30: Förderelement
- 31: Trommel
- 32: Opferplatte
- 33: Stifte (Rührelemente)
- 40: Applikationsverfahren
- 41..46: Verfahrensschritte

## Patentansprüche

1. Verfahren zum Applizieren eines aushärtbaren Baustoffs, insbesondere in einem generativen Verfahren, umfassend die Schritte:
- Bereitstellen von wenigstens zwei separaten Komponenten des Baustoffs;
- Zugabe der wenigstens zwei separaten Komponenten in eine Mischvorrichtung (10), insbesondere in eine Mischkammer der Mischvorrichtung, mit einer Zuführvorrichtung (9);
- Vermischen der wenigstens zwei separaten Komponenten in der Mischvorrichtung (10) unter Erhalt des aushärtbaren Baustoffs in abbindendem Zustand;
- Zuführen des abbindenden Baustoffs durch eine Förderleitung (12) zu einem in wenigstens einer Raumrichtung bewegbaren Druckkopf (3) unter Verwendung einer Fördervorrichtung (30);
- Applizieren des abbindenden Baustoffs mit dem bewegbaren Druckkopf (3).

2. Verfahren nach Anspruch 1, wobei die Mischvorrichtung (10), in welcher der aushärtbare Baustoff in abbindendem Zustand erzeugt wird, einen dynamischen Mischer umfasst, welcher in Stromrichtung vor dem Druckkopf (3) angeordnet ist, wobei bevorzugt am bewegbaren Druckkopf (3) kein dynamischen Mischer angeordnet ist.

3. Verfahren nach wenigstens einem der Ansprüche 1 - 2, wobei der aushärtbare Baustoff in abbindendem Zustand nach erfolgter Vermischung der wenigstens zwei separaten Komponenten keinen dynamischen Mischer mehr durchläuft.

4. Verfahren nach wenigstens einem der Ansprüche 1 - 3, wobei der aushärtbare Baustoff nach erfolgter Vermischung der wenigstens zwei separaten Komponenten in abbindendem Zustand vor dem Austritt aus dem Druckkopf (3) durch einen statischen Mischer (6) geleitet wird.

5. Verfahren nach wenigstens einem der Ansprüche 1 - 4, wobei dem aushärtenden Baustoff ein Zusatzmittel zur Beeinflussung der chemischen und/oder physikalischen Eigenschaften des abbindenden Baustoffs beigegeben wird, insbesondere über eine in der Förderleitung und/oder im Bereich des Druckkopfs (3) vorliegende Einlassdüse (5).

6. Verfahren nach wenigstens einem der Ansprüche 1 - 5, wobei der erhaltene abbindende Baustoff vor dem Austritt aus dem Druckkopf (3) in der Förderleitung (12) und/oder im Druckkopf (3) be- und/oder entlüftet wird, insbesondere durch Luftzufuhr, durch eine Vakuumbehandlung und/oder durch Vibration.

7. Verfahren nach wenigstens einem der Ansprüche 1 - 6, wobei eine Temperatur des abbindenden Baustoffs vor dem Austritt aus dem Druckkopf (3) verändert wird, insbesondere durch ein Heizelement und/oder ein Kühlelement.

8. Verfahren nach wenigstens einem der Ansprüche 1 - 7, wobei eine chemische und/oder physikalische Eigenschaft des aushärtenden Baustoffs in der Mischvorrichtung (10), in der Förderleitung (12), im Druckkopf (3) und/oder nach der Abgabe aus dem Druckkopf (3) gemessen wird, wobei bevorzugt eine Temperatur, ein Druck, eine Feuchtigkeit, eine elektrische Leitfähigkeit, eine Geschwindigkeitsverteilung und/oder eine Viskosität des abbindenden Baustoffs gemessen wird.

9. Verfahren nach Anspruch 8, wobei die Bestimmung der chemischen und/oder physikalischen Eigenschaft während dem Applizieren des Baustoffs erfolgt, insbesondere in Echtzeit.

10. Verfahren nach wenigstens einem der Ansprüche 1 - 9, wobei eine Durchlassöffnung am Auslass (4) des Druckkopfs (3) während dem Applizieren in Abhängigkeit der Struktur des zu erzeugenden Objekts verändert wird.

11. Verfahren nach wenigstens einem der Ansprüche 1 - 10, wobei die Förderleistung der Fördervorrichtung (30) in Abhängigkeit der gemessenen chemischen und/oder physikalischen Eigenschaft des aushärtbaren Baustoffs, insbesondere in Abhängigkeit des Drucks des abbindenden Baustoffs in der Förderleitung (12) und/oder im Druckkopf (3), gesteuert und/oder geregelt wird.

12. Verfahren nach wenigstens einem der Ansprüche 1 - 11, wobei eine Zugaberate wenigstens einer Komponente des Baustoffs in Abhängigkeit der chemischen und/oder physikalischen Eigenschaft des abbindenden Baustoffs geregelt und/oder gesteuert wird.

13. Verfahren nach wenigstens einem der Ansprüche 1 - 12, wobei:
- eine erste Komponente des Baustoffs in fester Form vorliegt und ein mineralisches Bindemittel sowie optional Aggregate, insbesondere Kies, Sand, Gesteinskörnungen und/oder Füller, sowie optional ein Beton- und/oder Mörtelzusatzmittel umfasst;
- eine zweite Komponente des Baustoffs in flüssiger Form vorliegt und Wasser umfasst;
- eine optionale dritte Komponente vorliegt, welche einen Verflüssiger umfasst;
- optional ein Zusatzmittel vorliegt, welches über die Einlassdüse (5) zugegeben werden kann und bevorzugt ein Fliessmittel, ein Rheologiehilfsmittel und/oder einen Verzögerer umfasst;
wobei die Komponenten und gegebenenfalls das Zusatzmittel in räumlich voneinander getrennten Behältnissen (11.1, 11.2, 11.3, 11.4) vorliegen, welche Bestandteil der Zuführeinrichtung sind und/oder mit dieser kommunizieren.

14. Verfahren nach einem der vorangehenden Ansprüche, wobei die erste Komponente eine trockene mineralische Bindemittelzusammensetzung umfassend Zement und mineralische Füllstoffe beinhaltet, wobei die Bindemittelzusammensetzung mindestens einen auf Aluminiumsulfat basierenden Abbinde-Beschleuniger, mindestens einen Superverflüssiger auf Basis eines Polycarboxylatethers und mindestens ein Rheologiehilfsmittel umfasst, wobei der Polycarboxylatether mindestens 1 mmol, insbesondere mindestens 1.2 mmol, im Speziellen mindestens 1.8 mmol, Carbonsäuregruppen pro Gramm trockenen Polycarboxylatether aufweist.

15. Formkörper erhältlich durch oder erhalten durch ein Verfahren gemäss wenigstens einem der Ansprüche 1-14.
